# EUROPEAN PATENT SPECIFICATION

(11) **EP 3 663 658 B1**
(45) Date of publication and mention of the grant of the patent: **20.01.2021**
(21) Application number: 18211139.3
(22) Date of filing: 07.12.2018
(51) Int. Cl.: F24F 1/027, F25B 9/00, F24F 12/00, F24F 11/81, F25B 40/02

(54) **AIR-CONDITIONER**
KLIMAANLAGE
CLIMATISEUR

(43) Date of publication of application: 10.06.2020
(73) Proprietor: DAIKIN INDUSTRIES, LTD., Osaka-Shi, Osaka 530-8323 (JP); Daikin Europe N.V., 8400 Oostende (BE)
(72) Inventor: VANDAELE, Stefan, 8400 Oostende (BE); YAMAGUCHI, Takahiro, 8400 Oostende (BE)
(74) Representative: Global IP Europe Patentanwaltskanzlei

(56) References cited:
- EP-A1- 2 821 727
- WO-A1-2007/138954
- WO-A1-2017/025877
- GB-A- 2 528 642
- US-A- 4 655 278
- US-A- 6 038 879
- US-A1- 2012 216 558

## Description

### Field of the Invention

The present invention relates to an air-conditioner.

### Background

EP 0091643 A2 proposes an air-conditioner having a total heat exchanger configured to cause a heat-exchange between ventilation intake air and ventilation exhaust air. In this air-conditioner, the ventilation exhaust air that has passed through the total heat exchanger merges with outside air that has passed through an outdoor heat exchanger, and then discharged to the outside. Hence, this air-conditioner can reclaim heat of the ventilation exhaust air to improve the performance of an air-conditioner.

However, when the outside air is relatively high during a cooling operation or relatively low during a heating operation, it is difficult to achieve a good heat exchange efficiency in the outdoor heat exchanger. Thus, even if the total heat exchanger is used, the performance of the air-conditioner cannot be improved sufficiently.

US 2012/216558 A1 discloses an air-conditioner, comprising: a return-air inlet and a supply-air outlet each communicating with a predetermined space; a first main air channel configured to allow air to flow therein from the return-air inlet towards the supply-air outlet; a first heat exchanger disposed in the first main air channel to cause a heat-exchange between refrigerant flowing therein and air passing therethrough; an outside-air inlet and an exhaust-air outlet each communicating with an outside of the predetermined space; a second main air channel configured to allow air to flow therein from the outside-air inlet towards the exhaust-air outlet; a second heat exchanger disposed in the second main air channel to cause a heat-exchange between refrigerant flowing therein and air passing therethrough; and an exhaust ventilation channel configured to allow air to flow therein from the return-air inlet towards the exhaust-air outlet, wherein: the exhaust ventilation channel is configured to allow ventilation exhaust air to pass through the second heat exchanger, the ventilation exhaust air being air that has been taken in through the return-air inlet and to be discharged through the exhaust-air outlet: and the air-conditioner further comprises an airflow regulator configured to regulate a flow of each of at least first passing air, second passing air and the ventilation exhaust air the first passing air being air that has been taken in through the return-air inlet and to be discharged through the supply-air outlet, the second passing air being air that has been taken in through the outside-air inlet and to be discharged through the exhaust-air outlet.

EP 2 821 727 A1 discloses using supercritical carbon dioxide refrigerant in a heat-pump circuit combined with a ventilation system.

### Summary

The object of the present invention is to provide an air-conditioner with a higher performance.

A first aspect of the present invention provides an air-conditioner, comprising: a return-air inlet and a supply-air outlet each communicating with a predetermined space; a first main air channel configured to allow air to flow therein from the return-air inlet towards the supply-air outlet; a first heat exchanger disposed in the first main air channel to cause a heat-exchange between refrigerant flowing therein and air passing therethrough; an outside-air inlet and an exhaust-air outlet each communicating with an outside of the predetermined space; a second main air channel configured to allow air to flow therein from the outside-air inlet towards the exhaust-air outlet; a second heat exchanger disposed in the second main air channel to cause a heat-exchange between refrigerant flowing therein and air passing therethrough; and an exhaust ventilation channel configured to allow air to flow therein from the return-air inlet towards the exhaust-air outlet, wherein the exhaust ventilation channel is configured to allow ventilation exhaust air to pass through the second heat exchanger, the ventilation exhaust air being air that has been taken in through the return-air inlet and to be discharged through the exhaust-air outlet.

With the above configuration, a difference between temperature of air passing through the second heat exchanger and temperature of the refrigerant flowing in the second heat exchanger is increased by utilizing the ventilation exhaust air. Thus, performance of the air-conditioner can be improved with a simple structure.

According to a preferred embodiment of the air-conditioner mentioned above, the exhaust ventilation channel is configured to allow second passing air to be mixed with the ventilation exhaust air before the second passing air passes through the second heat exchanger, the second passing air being air that has been taken in through the outside-air inlet and to be discharged through the exhaust-air outlet.

With this configuration, it is possible to widen the operating range at low load both during a cooling operation and during a heating operation. Thus, performance of the air-conditioner can be further improved.

According to another preferred embodiment of any one of the air-conditioners mentioned above, the air-conditioner further comprises: a supply ventilation channel configured to allow air to flow therein from the outside-air inlet towards the supply-air outlet.

With this configuration, the air-conditioner allows air to flow from the outside to the predetermined space to perform a forced air-supply of the predetermined space. Thus, the ventilation of the predetermined space can be enhanced.

According to another preferred embodiment of any one of the air-conditioners mentioned above, the supply ventilation channel is configured to allow first passing air to be mixed with ventilation intake air before the first passing air passes through the first heat exchanger, the first passing air being air that has been taken in through the return-air inlet and to be discharged through the supply-air outlet, the ventilation intake air being air that has been taken in through the outside-air inlet and to be discharged through the supply-air outlet.

With this configuration, a difference between temperature of air passing through the first heat exchanger and temperature of the refrigerant flowing in the first heat exchanger is increased by utilizing the ventilation intake air. Thus, performance of the air-conditioner can be improved with a simple structure.

According to another preferred embodiment of any one of the air-conditioners mentioned above, the air-conditioner further comprises a total heat exchanger forming at least a part of the supply ventilation channel and at least a part of the exhaust ventilation channel to cause a heat-exchange between the ventilation intake air and the ventilation exhaust air.

With this configuration, temperature of the ventilation intake air is moderated by temperature of the ventilation exhaust air. Thus, an air-conditioning load of the air-conditioner can be reduced even when the ventilation intake air is taken in into the space to be air-conditioned.

According to the invention as claimed in claim 1, the air-conditioner comprises: an airflow regulator configured to regulate a flow of each of at least first passing air, second passing air and the ventilation exhaust air, the first passing air being air that has been taken in through the return-air inlet and to be discharged through the supply-air outlet, the second passing air being air that has been taken in through the outside-air inlet and to be discharged through the exhaust-air outlet.

With this configuration, a flow of each of the first passing air, the second passing air and the ventilation exhaust air can be regulated. Thus, air-conditioning performance and/or ventilation performance of the air-conditioner can be optimized. Regulating a flow of air may include regulating a flow rate of the air, regulating a flow ratio of the air with respect to other air, and/or switching whether flowing the air or not.

According to another preferred embodiment of any one of the air-conditioners mentioned above, the airflow regulator includes: a first main damper disposed in the first main air channel; a second main damper disposed in the second main air channel; and an exhaust damper disposed in the exhaust ventilation channel.

With this configuration, since dampers are used, it is possible to regulate the flow of each of the first passing air, the second passing air and the ventilation exhaust air with a simple structure.

According to another preferred embodiment of any one of the air-conditioners mentioned above, the first heat exchanger is arranged such that an air-passing direction of the first heat exchanger is inclined with respect to an extending direction of the first main air channel; and the second heat exchanger is arranged such that an air-passing direction of the second heat exchanger is inclined with respect to an extending direction of the second main air channel.

With this configuration, an air-passing area of the first heat exchanger can be made smaller than a sectional area of the first main air channel and an air-passing area of the second heat exchanger can be made smaller than a sectional area of the second main air channel. Thus, a size of the air-conditioner can be reduced while maintaining heat-exchange capabilities of the first heat exchanger and the second heat exchanger.

According to another preferred embodiment of any one of the air-conditioners mentioned above, the first main air channel and the second main air channel are arranged substantially in parallel and configured such that a direction from the return-air inlet to the supply-air outlet and a direction from the outside-air inlet to the exhaust-air outlet are substantially opposite.

With this configuration, the first main air channel and the second main air channel can be separated into two sides. Thus, it is possible to obtain the air-conditioner that is easy to position between the predetermined space and the outside thereof. Moreover, the first passing air and the second passing air flow substantially countercurrently. Thus, a configuration can be obtained that is suitable for arranging components such as the first heat exchanger, the second heat exchanger, and so on.

According to another preferred embodiment of any one of the air-conditioners mentioned above, the first main air channel and the second main air channel are arranged substantially in parallel and configured such that a direction from the return-air inlet to the supply-air outlet and a direction from the outside-air inlet to the exhaust-air outlet are substantially the same.

With this configuration, the first main air channel and the second main air channel can be separated into two sides. Thus, it is possible to obtain the air-conditioner that is easy to position between the predetermined space and the outside thereof. Moreover, the first passing air and the second passing air flow substantially parallelly. Thus, a configuration can be obtained that is suitable for smoothly passing the first passing air and the second passing air.

According to another preferred embodiment of any one of the air-conditioners mentioned above, the supply ventilation channel and the exhaust ventilation channel are arranged substantially in parallel and configured such that a direction from the outside-air inlet to the supply-air outlet and a direction from the return-air inlet to the exhaust-air outlet are substantially opposite.

With this configuration, the ventilation intake air and the ventilation exhaust air flow substantially countercurrently. Thus, a configuration can be obtained that is suitable for arranging components such as the total heat exchanger, the first fan, the second fan, and so on.

According to another preferred embodiment of any one of the air-conditioners mentioned above, the supply ventilation channel and the exhaust ventilation channel are arranged substantially in parallel and configured such that a direction from the outside-air inlet to the supply-air outlet and a direction from the return-air inlet to the exhaust-air outlet are substantially the same.

With this configuration, the ventilation intake air and the ventilation exhaust air flow substantially parallelly. Thus, a configuration can be obtained that is suitable for smoothly passing the ventilation intake air and the ventilation exhaust air.

According to another preferred embodiment of any one of the air-conditioners mentioned above, the air-conditioner further comprises: a pipe connecting mechanism configured to connect each of the first heat exchanger and the second heat exchanger to a refrigerant compressor, via a high-pressure gas refrigerant pipe connected to a discharge side of the refrigerant compressor and a low-pressure gas refrigerant pipe connected to a suction side of the refrigerant compressor, such that the first heat exchanger, the second heat exchanger and the refrigerant compressor form a heat pump circuit.

With this configuration, the air-conditioning system can be obtained without mounting the refrigerant compressor and so on of the heat pump circuit on the air-conditioner. Thus, it is possible to obtain the air-conditioner that is compact, light, silent, and/or easy to design, install, and/or do maintenance.

According to the invention as claimed in claim 1, each of the first and second heat exchangers is configured to flow carbon dioxide refrigerant therein.

The heat exchange efficiency of a system using carbon dioxide refrigerant tends to be lower than a similar system using other refrigerant such as R410A or other HFC. On this point, in the above air-conditioner, the heat exchange efficiency can be improved in spite of using carbon dioxide refrigerant, since the second heat exchanger can exchange heat with the ventilation exhaust air.

According to the invention as claimed in claim 1, the airflow regulator is configured to regulate the flows of the second passing air and the ventilation exhaust air such that the temperature of an air which goes through the second heat exchanger is under the supercritical temperature of the carbon dioxide refrigerant flowing in the second heat exchanger.

With this configuration, the temperature of the air subjected to a heat exchange with the carbon dioxide refrigerant at the second heat exchanger can be maintained under the supercritical temperature of the carbon dioxide refrigerant.

According to another preferred embodiment of any one of the air-conditioners mentioned above, the airflow regulator is configured to switch whether the ventilation exhaust air goes through the second heat exchanger.

With this configuration, it is possible to achieve an appropriate air flow in more secure manner.

According to another preferred embodiment of any one of the air-conditioners mentioned above, the air-conditioner further comprises a controller configured to determine whether a predetermined condition is met that the temperature of an air drawn into the air-conditioner from the outside-air inlet is higher than or equal to a predetermined threshold value, wherein the airflow regulator is configured to regulate the flows of the second passing air and the ventilation exhaust air such that the ventilation exhaust air goes through the second heat exchanger if the predetermined condition is met, and that the ventilation exhaust air is prevented from going through the second heat exchanger if the predetermined condition is not met.

With this configuration, the temperature of the air subjected to a heat exchange with the refrigerant at the second heat exchanger can be appropriately lowered. Thus, the heat exchange efficiency of the second heat exchanger can be further improved.

According to another preferred embodiment of any one of the air-conditioners mentioned above, the airflow regulator is configured to switch whether the ventilation exhaust air that has been passed through the total heat exchanger goes through the second heat exchanger.

With this configuration, it is possible to achieve an appropriate air flow in more secure manner.

According to another preferred embodiment of any one of the air-conditioners mentioned above, the second heat exchanger includes: a second main heat exchanger configured to cause a heat-exchange between refrigerant flowing therein and air passing therethrough; and a second sub heat exchanger disposed in the exhaust ventilation channel to cause a heat-exchange between refrigerant flowing therein and air passing there through.

In other words, the second sub heat exchanger is arranged such that a flow ratio of the ventilation exhaust air with respect to the second passing air is higher in the second sub heat exchanger than in the second main heat exchanger. Thereby, refrigerant can be subjected to a heat exchange with cooler air after flowing through the second main heat exchanger in a cooling operation. Thus, heat exchange efficiency can be improved in the cooling operation.

According to another preferred embodiment of any one of the air-conditioners mentioned above, the second sub heat exchanger is configured to flow refrigerant therein that has flown through the second main heat exchanger when the second heat exchanger functions as a condenser.

With this configuration, it is possible to ensure an improvement in heat exchange efficiency of the cooling operation.

According to another preferred embodiment of any one of the air-conditioners mentioned above, the second sub heat exchanger is arranged so as to allow the ventilation exhaust air to pass therethrough and so as to prevent the second passing air from passing therethrough.

With this configuration, it is easy to make the flow ratio of ventilation exhaust air with respect to second passing air higher in the second sub heat exchanger than in the second main heat exchanger. The second sub heat exchanger may be arranged so as not to allow the second passing air to pass therethrough.

According to another preferred embodiment of any one of the air-conditioners mentioned above, the second sub heat exchanger and the second main heat exchanger are arranged in series in this order along a direction of airflow of the ventilation exhaust air.

With this configuration, the ventilation exhaust air can be mixed with the second passing air after passing through the second sub heat exchanger. Thus, it is easy to make the flow ratio of ventilation exhaust air with respect to second passing air higher in the second sub heat exchanger than in the second main heat exchanger.

According to another preferred embodiment of any one of the air-conditioners mentioned above, the total heat exchanger, the second sub heat exchanger and the second main heat exchanger are arranged in series in this order along a direction of airflow of the ventilation exhaust air.

With this configuration, it is possible to further improve the heat exchange efficiency of the second heat exchanger.

According to another preferred embodiment of any one of the air-conditioners mentioned above, the second main heat exchanger is arranged so as to allow the second passing air to pass therethrough and so as to prevent the ventilation exhaust air from passing therethrough.

With this configuration, it is easy to make the flow ratio of ventilation exhaust air with respect to second passing air higher in the second sub heat exchanger than in the second main heat exchanger. The second main heat exchanger may be arranged so as not to allow the ventilation exhaust air to pass therethrough.

According to another preferred embodiment of any one of the air-conditioners mentioned above, the second main heat exchanger and the second sub heat exchanger form a plate-like shape; and the exhaust ventilation channel has a separation plate separating a space where air is drawn to the second main heat exchanger and the second sub heat exchanger into a main space where air is drawn to the second main heat exchanger and a sub space where air is drawn to the second sub heat exchanger.

With this configuration, the separation plate separates the second main air channel and the exhaust ventilation channel on an upstream side of the second main heat exchanger and the second sub heat exchanger. Thus, it is easy to make the flow ratio of ventilation exhaust air with respect to second passing air higher in the second sub heat exchanger than in the second main heat exchanger.

According to another preferred embodiment of any one of the air-conditioners mentioned above, the second sub heat exchanger is arranged so as to come into contact with at least a part of the second passing air.

With this configuration, a heat exchange between refrigerant flowing in the second sub heat exchanger and the second passing air is caused. Thus, performance of the air-conditioner can be improved even when the ventilation exhaust air is not passing through the second sub heat exchanger.

According to another preferred embodiment of any one of the air-conditioners mentioned above, the second sub heat exchanger is disposed on a downstream side of the total heat exchanger in the direction from the return-air inlet to the exhaust-air outlet.

With this configuration, difference between temperature of the ventilation intake air and temperature of the ventilation exhaust air in the total heat exchanger is not reduced by the second sub heat exchanger. Thus, heat exchanging efficiency in the total heat exchanger can be maintained high.

According to another preferred embodiment of any one of the air-conditioners mentioned above, the air-conditioner further comprises: an electrical pre-heater disposed in the supply ventilation channel between the outside-air inlet and the total heat exchanger.

With this configuration, the ventilation intake air can be pre-heated before flowing into the total heat exchanger in a heating operation, i.e. when the first heat exchanger functions as a condenser. Thus, it is prevented that cold air is discharged from the supply-air outlet and it is possible to reduce a heat exchange load of the total heat exchanger.

According to another preferred embodiment of any one of the air-conditioners mentioned above, the air-conditioner further comprises: a housing accommodating at least the first main air channel, the second main air channel, and the exhaust ventilation channel; a first fan configured to draw air in the housing towards the supply-air outlet; and a second fan configured to draw air in the housing towards the exhaust-air outlet.

With this configuration, components of an indoor unit of an air-conditioning system, an outdoor unit of an air-conditioning system, and a ventilator are integrated as a unit in the same housing. Thus, it is possible to obtain the air-conditioner that is easy to design, install, and/or do maintenance. Moreover, since appropriate air flows in the air-conditioner are generated, performance of the air-conditioner can be ensured.

### Brief Description of the Drawings

Fig. 1 is a schematic diagram indicating an arrangement of an air-conditioning system including a plurality of air-conditioners according to an embodiment of the present invention.
Fig. 2 is a perspective view showing an installation of the air-conditioner.
Fig. 3 is a schematic diagram indicating a structural configuration of the air-conditioner.
Fig. 4 is a schematic piping diagram of the air-conditioner.
Fig. 5 is a schematic piping diagram of the air-conditioning system.
Fig. 6 is a block diagram indicating a functional configuration of the air-conditioning system.
Fig. 7 is a schematic diagram indicating a heat-reclaiming standard state of the air-conditioner.
Fig. 8 is a schematic diagram indicating a no-heat-reclaiming standard state of the air-conditioner.
Fig. 9 is a schematic diagram indicating a low-ventilation state of the air-conditioner.
Fig. 10 is a schematic diagram indicating an air-conditioning state of the air-conditioner.
Fig. 11 is a schematic diagram indicating a low-cooling state of the air-conditioner.
Fig. 12 is a schematic diagram indicating a free-cooling state of the air-conditioner.
Fig. 13 is a schematic diagram indicating a refrigerant-evacuation state of the air-conditioner.
Fig. 14 is a schematic diagram for explaining pressure balances in the air-conditioner and the surround thereof.
Fig. 15 is a flow chart indicating processes performed by the air-conditioner.
Fig. 16 is a schematic diagram indicating a schematic configuration of a first variation of the air-conditioner.
Fig. 17 is a schematic diagram indicating a schematic configuration of a second variation of the air-conditioner.
Fig. 18 is a schematic diagram indicating a schematic configuration of a third variation of the air-conditioner.
Fig. 19 is a schematic diagram indicating a schematic configuration of a fourth variation of the air-conditioner.
Fig. 20 is a schematic diagram indicating a schematic configuration of a fifth variation of the air-conditioner.
Fig. 21 is a schematic diagram indicating a schematic configuration of a sixth variation of the air-conditioner.
Fig. 22 is a schematic piping diagram of a variation of the air-conditioning system.

### Detailed Description of Preferred Embodiments

A preferred embodiment of an air-conditioner and an air-conditioning system according to the present invention is described below with reference to the drawings.

### Configuration of Air-conditioning System

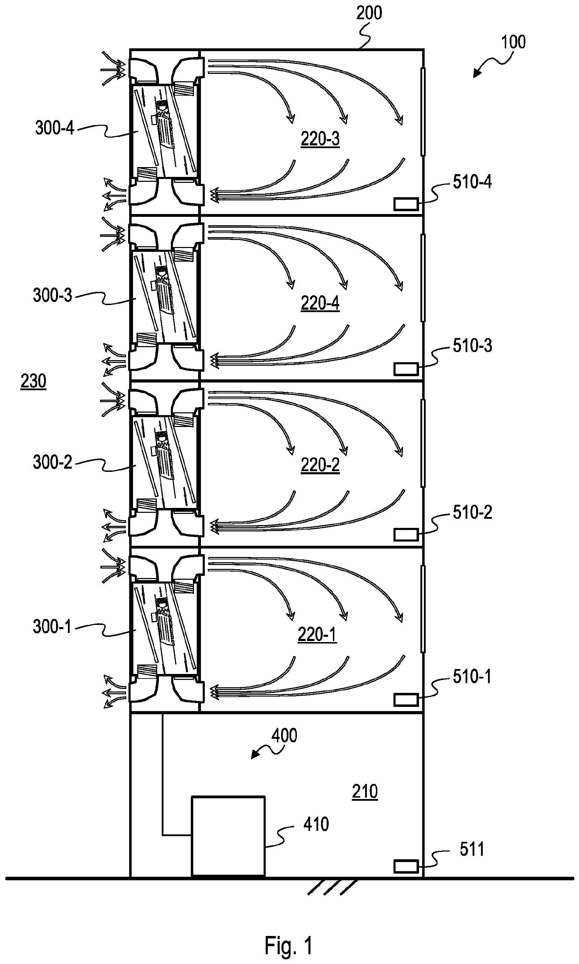

Fig. 1 is a schematic diagram indicating an arrangement of the air-conditioning system including a plurality of air-conditioners according to the present embodiment.

The air-conditioning system 100 is a heat pump type air-conditioning system using carbon dioxide (CO2) refrigerant. As shown in Fig. 1, a most part of the air-conditioning system 100 is arranged in a building 200. This building has a plurality of predetermined spaces 220 and a machine space 210. Each of the predetermined spaces 220 is a space to be ventilated and/or air-conditioned as necessary. Although the number of the predetermined spaces 220 are four in this embodiment, it may be one, two, or any other counting number. Although the machine space 210 is within the building 200 in this embodiment, it may be located substantially in the outside 230 of the building 200. The positional arrangement of the spaces is not limited to the arrangement depicted in Fig. 1.

The air-conditioning system 100 comprises a plurality of air-conditioners 300, a refrigerant compressor system 400, a plurality of room CO2 sensors 510, and a machine space CO2 sensor 511. The plurality of air-conditioners 300 have substantially the same configuration. The plurality of room CO2 sensors 510 and the machine space CO2 sensor 511 have substantially the same configuration.

The first to fourth the air-conditioners 300-1 to 300-4 are arranged in or close to the first to fourth predetermined spaces 220-1 to 200-4, respectively. The refrigerant compressor system 400 extends from the machine space 210 to each air-conditioner 300. The refrigerant compressor system 400 includes a compressor unit 410 arranged in the machine space 210. The first to fourth room CO2 sensors 510-1 to 510-4 are arranged in the first to fourth predetermined spaces 220-1 to 200-4, respectively. The machine space CO2 sensor 511 is arranged in the machine space 210. It is preferable that each CO2 sensor 510, 511 is positioned close to the floor of the corresponding space 220, 210. As each of the CO2 sensors 510, 511, a sensor performing a general refrigerant leakage detection may be utilized.

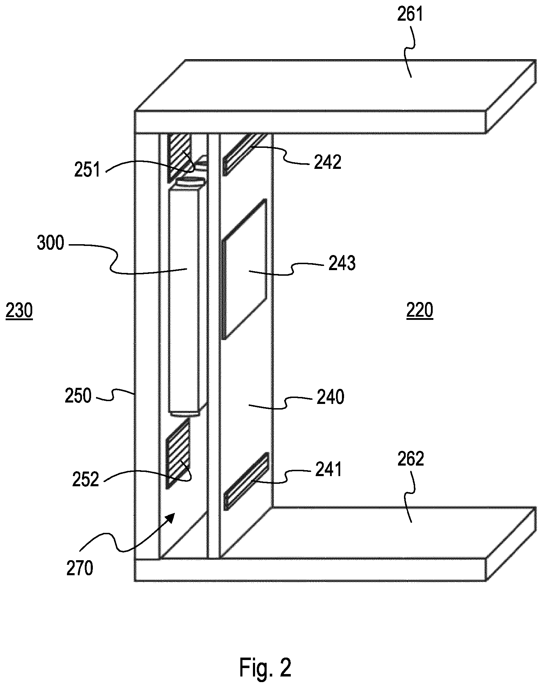

Fig. 2 is a perspective view showing an installation of the air-conditioner 300.

Each predetermined space 220 is substantially sectioned off in a vertical direction by a ceiling slab 261 and a floor slab 262, and substantially sectioned off in a horizontal direction by one or more of inner walls 240. At least one of the inner walls 240 faces an outer wall 520 of the building 200 (see Fig. 1), while being spaced away from the facing outer wall 520.

As shown in Fig. 2, the air-conditioner 300 is positioned between the predetermined space 220 and the outside 230. More specifically, the air-conditioner 300 is installed in a rear wall space 270 defined by the ceiling slab 261, the floor slab 262, the inner wall 240 and the outer wall 520.

The inner wall 240 is provided with an inspection opening (not show) in an area facing the air-conditioner 300, and an inspection door 243 covering the opening. The inner wall 240 is formed with an RA (return-air) suction grill 241 and an SA (supply-air) discharge grill 242 which are openings of the inner wall 240. The outer wall 250 is formed with an OA (outside-air) suction grill 251 and an EA (exhaust-air) discharge grill 252 which are openings of the outer wall 250. The rear wall space 270 side of each grills 241, 242, 251, 252 is connected to the air-conditioner 300 by a duct (not shown) or the like. Thereby, the air-conditioner 300 communicates with the predetermined space 220 at two different positions and with the outside 230 at two different positions.

It is preferable that the air-conditioner 300 has a substantially box shape which is thin in the horizontal direction. This shape is advantageous for arranging the air-conditioner 300 in the rear wall space 270 while keeping the rear wall space 270 thin as much as possible. Meanwhile, the arrangement of the air-conditioner 300 is not limited to the arrangement depicted in Fig. 2. For instance, a part of the air-conditioner 300 may be exposed to the predetermined space 220 and/or the outside 230, and whole of the air-conditioner 300 may be exposed to the predetermined space 220 or the outside 230.

In each air-conditioner 300, components of an indoor unit of an air-conditioning system, an outdoor unit of an air-conditioning system, a ventilator, and an air heat reclaimer are integrated.

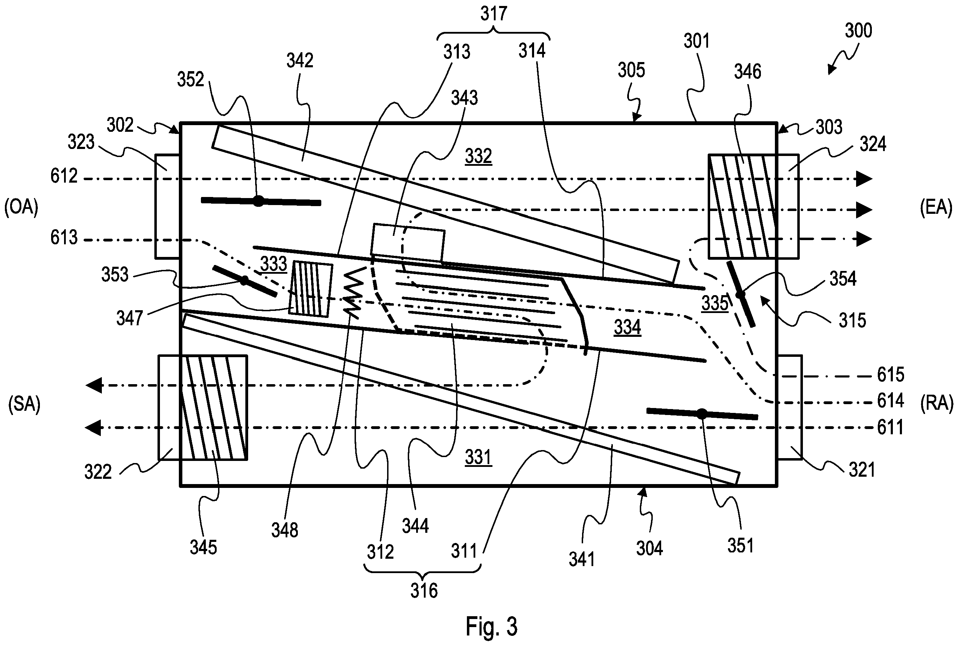

Fig. 3 is a schematic diagram indicating a structural configuration of the air-conditioner 300.

For instance, the left side and the right side in the Fig. 3 correspond to the upper side and the lower side in the Fig. 2, respectively, and the vertical direction in the Fig. 3 correspond to the depth direction in the Fig. 2. In other words, the left side and the right side in the Fig. 3 may correspond to the upper side and the lower side in a state where the air-conditioner 300 is used, respectively, and the vertical direction in the Fig. 3 may correspond to a horizontal direction extending along the inner wall 240 and/or the outer wall 520.

The air-conditioner 300 has a housing 301, a return-air inlet 321, a supply-air outlet 322, an outside-air inlet 323, an exhaust-air outlet 324, an RA separator 311, an SA separator 312, an OA separator 313, an EA separator and a total heat exchanger 344.

The housing 301 is a boxy member having a substantially cuboid shape and accommodating a most part of the air-conditioner 300. The housing 301 includes a pair of opposing main faces (arranged frontward and rearward in Fig. 3, and thus omitted) which are substantially parallel to the inner wall 240 and/or the outer wall 250.

Each of the return-air inlet 321 and the supply-air outlet 322 communicates with the predetermined space 220, and each of the outside-air inlet 323 and the exhaust-air outlet 324 communicates with the outside 230 (see Fig. 2). More specifically, each of the return-air inlet 321, the supply-air outlet 322, the outside-air inlet 323 and the exhaust-air outlet 324 has an opening formed in the housing 301. The return-air inlet 321, the supply-air outlet 322, the outside-air inlet 323 and the exhaust-air outlet 324 are connected to the RA suction grill 241, the SA discharge grill 242, the OA suction grill 251 and the EA discharge grill 252 by ducts or the like, respectively in this order.

The return-air inlet 321, the supply-air outlet 322, the outside-air inlet 323 and the exhaust-air outlet 324 are substantially arranged along the same plane which is substantially parallel to the above-mentioned main faces of the housing 301, i.e. substantially parallel to the inner wall 240 and/or the outer wall 250.

The supply-air outlet 322 and the outside-air inlet 323 are arranged on the same first face 302 of the housing 301, preferably on the side closer to the supply-air discharge grill 242 and the outside-air suction grill 251 in a state where the air-conditioner 300 is used. The return-air inlet 321 and the exhaust-air outlet 324 are arranged on the same second face 303 of the housing 301 that is opposite to the first face 302, preferably on the side closer to the return-air suction grill 241 and the exhaust-air discharge grill 252 in a state where the air-conditioner 300 is used.

The housing 301 has third and fourth faces 304, 305 that are opposite to each other and each connected to both the first and second faces 302, 303. The return-air inlet 321 and the supply-air outlet 322 are arranged closer to the third face 304 than to the fourth face 305, and the outside-air inlet 323 and the exhaust-air outlet 324 are arranged closer to the fourth face 305 than to the third face 304. In other words, the return-air inlet 321, the supply-air outlet 322, the outside-air inlet 323 and the exhaust-air outlet 324 are arranged in this order around the housing 301.

The housing 301 also has fifth and sixth faces (not shown), as the above-mentioned main faces, that are opposite to each other and each connected to all the first to fourth faces 302 to 305.

The RA separator 311, the SA separator 312, the OA separator 313 and the EA separator 314 are arranged within the housing 301 and each connected to both the fifth and sixth faces of the housing 301. Each of the separators 311, 312, 313, 314 is substantially parallel to the third face 304 and/or the fourth face 305.

The RA separator 311 is arranged close to the return-air inlet 321. Meanwhile, the RA separator 311 is configured to form an opening between the RA separator 311 and the second face 303 of the housing 301. The SA separator 312 is arranged close to the supply-air outlet 322 and substantially flush with the RA separator 311. The SA separator 312 is connected to both the first face 302 of the housing 301 and the RA separator 311. Meanwhile, the RA separator 311 and the SA separator 312 form an opening therebetween. Thus, the separator unit (hereinafter referred to as "the first separator unit 316") of the RA separator 311 and the SA separator 312 separates the inner space of the housing 301, while having an opening close to the return-air inlet 321 and another opening in the middle.

The OA separator 313 is arranged close to the outside-air inlet 323. Meanwhile, the OA separator 313 is configured to form an opening between the OA separator 313 and the first face 302 of the housing 301. The EA separator 314 is arranged close to the exhaust-air outlet 324 and substantially flush with the OA separator 313. Meanwhile, EA separator 314 is configured to form an opening between EA separator 314 and the second face 303 of the housing 301. This opening is hereinafter referred to as "the inner aperture 315." The EA separator 314 is connected to the OA separator 313. Meanwhile, the OA separator 313 and the EA separator 314 form an opening therebetween. Thus, the separator unit (hereinafter referred to as "the second separator unit") of the OA separator 313 and the EA separator 314 separates the inner space of the housing 301, while having an opening close to the outside-air inlet 323, another opening in the middle, and further another opening (the inner aperture 315) close to the exhaust-air outlet 324.

The first separator unit 316 and the second separator unit 317 are spaced away from each other. The first separator unit 316 is arranged on the third face 304 side, and the second separator unit 317 is arranged on the fourth face 305 side. In other words, the first separator unit 316 is arranged closer to the return-air inlet 321 and the supply-air outlet 322 than the second separator unit 317, and the second separator unit 317 is arranged closer to the outside-air inlet 323 and the exhaust-air outlet 324 than the first separator unit 316.

The first and second separator units 316, 317 extend, substantially in parallel to each other, from the area between the return-air inlet 321 and the exhaust-air outlet 324 and the area between the supply-air outlet 322 and the outside-air inlet 323. Preferably, as shown in Fig. 2, the extending direction of the first and second separator units 316, 317 is slightly inclined towards the outside-air inlet 323 and/or the return-air inlet 321. The RA separator 311 of the first separator unit 316 and the EA separator 314 of the second separator unit 317 forms a space therebetween that communicates with the return-air inlet 321. The SA separator 312 and the OA separator 313 forms a space therebetween that communicates with the outside-air inlet 323.

The total heat exchanger 344 is disposed between the first separator unit 316 and the second separator unit 317. The total heat exchanger 344 has a plurality of first air paths and a plurality of second air paths (partially shown in Fig. 3) intersecting to each other via liners without merging to each other. The total heat exchanger 344 is configured to cause a total heat-exchange between air passing through the first air paths and air passing through the second air paths.

The total heat exchanger 344 is arranged such that the first air paths communicate with each of the above-mentioned space formed between the SA separator 312 and the OA separator 313 and the above-mentioned opening formed between the RA separator 311 and the SA separator 312. The total heat exchanger 344 is also arranged such that the second air paths communicate with each of the above-mentioned space formed between the RA separator 311 and the EA separator 314 and the above-mentioned opening formed between the OA separator 313 and the EA separator 314.

Thus, the air-conditioner 300 has a first main air channel 331, a second main air channel 332, a supply ventilation channel 333 and an exhaust ventilation channel 334 which are accommodated in the housing 301.

The first main air channel 331 is a space substantially formed by the third face 304 of the housing 301 and the first separator unit 316 therebetween. The first main air channel 331 is configured to allow air to flow therein from the return-air inlet 321 towards the supply-air outlet 322. The air that has been taken in through the return-air inlet 321 and to be discharged through the supply-air outlet 322 is hereinafter referred to as "the first passing air 611." As indicated by one of dashed-dotted arrows in Fig. 3, the first passing air 611 flows in the first main air channel 331.

The second main air channel 332 is a space substantially formed by the fourth face 305 of the housing 301 and the second separator unit 317 therebetween. The second main air channel 332 is configured to allow air to flow therein from the outside-air inlet 323 towards the exhaust-air outlet 324. The air that has been taken in through the outside-air inlet 323 and to be discharged through the exhaust-air outlet 324 is hereinafter referred to as "the second passing air 612." As indicated by one of dashed-dotted arrows in Fig. 3, the second passing air 612 flows in the second main air channel 332.

It should be noted that, the first main air channel 331 and the second main air channel 332 are arranged substantially in parallel, and configured such that a direction from the return-air inlet 321 to the supply-air outlet 322 and a direction from the outside-air inlet 323 to the exhaust-air outlet 324 are substantially opposite.

The supply ventilation channel 333 is substantially formed by the above-mentioned opening of the OA separator 313 that is close to the outside-air inlet 323, the above-mentioned space formed between the OA separator 313 and the SA separator 312, the first air paths of the total heat exchanger 344, and the above-mentioned opening formed between the SA separator 312 and the RA separator 311. The supply ventilation channel 333 is configured to allow air to flow therein from the outside-air inlet 323 towards the supply-air outlet 322. The air that has been taken in through the outside-air inlet 323 and to be discharged through the supply-air outlet 322 is hereinafter referred to as "the ventilation intake air 613." As indicated by one of dashed-dotted arrows in Fig. 3, the ventilation intake air 613 flows a part of the second main air channel 332, the supply ventilation channel 333, and then a part of the first main air channel 331.

The exhaust ventilation channel 334 is substantially formed by the above-mentioned opening of the RA separator 311 that is close to the return-air inlet 321, the above-mentioned space formed between the RA separator 311 and the EA separator 314, the second air paths of the total heat exchanger 344, and the above-mentioned opening formed between the OA separator 313 and the EA separator 314. The exhaust ventilation channel 334 is configured to allow air to flow therein from the return-air inlet 321 towards the exhaust-air outlet 324. The air that has been taken in through the return-air inlet 321 and to be discharged through the exhaust-air outlet 324 is hereinafter referred to as "the ventilation exhaust air 614." As indicated by one of dashed-dotted arrows in Fig. 3, the ventilation exhaust air 614 flows a part of the first main air channel 331, the exhaust ventilation channel 334, and then a part of the second main air channel 332.

It is also can be said that the total heat exchanger 344 forms at least a part of the supply ventilation channel 333 and at least a part of the exhaust ventilation channel 334. Thus, the total heat exchanger 344 is configured to cause a heat-exchange between the ventilation intake air 613 and the ventilation exhaust air 614.

The air-conditioner 300 further has a first heat exchanger 341, a second main heat exchanger 342 and a second sub heat exchanger 343. The first heat exchanger 341 and a set of the second main heat exchanger 342 and the second sub heat exchanger 343 are configured to function as an evaporator and a condenser of a heat pump circuit. Each of the first heat exchanger 341, the second main heat exchanger 342 and the second sub heat exchanger 343 is configured to cause a heat-exchange between refrigerant flowing therein and air passing therethrough. It is noted that the second main heat exchanger 342 and the second sub heat exchanger 343 may be regarded as a single heat exchanger (a second heat exchanger 342, 343).

The first heat exchanger 341 is disposed in the first main air channel 331. More specifically, the first heat exchanger 341 is disposed between the above-mentioned opening formed between the RA separator 311 and the SA separator 312 (i.e. the outlet of the first air paths of the total heat exchanger 344) and the supply-air outlet 322. In other words, the first heat exchanger 341 is arranged so as to allow not only the first passing air 611 but also the ventilation intake air 613 to pass therethrough. It can also be said that the supply ventilation channel 333 is configured to allow the first passing air 611 to be mixed with the ventilation intake air 613 before the first passing air 611 passes through the first heat exchanger 341. Preferably, the first heat exchanger 341 is arranged such that an air-passing direction of the first heat exchanger 341 is inclined with respect to an extending direction of the first main air channel 331.

The second main heat exchanger 342 is disposed in the second main air channel 332. More specifically, the second main heat exchanger 342 is disposed between the above-mentioned opening formed between the OA separator 313 and the EA separator 314 (i.e. the outlet of the second air paths of the total heat exchanger 344) and the exhaust-air outlet 324. In other words, the second main heat exchanger 342 is arranged so as to allow not only the second passing air 612 but also the ventilation exhaust air 614 to pass therethrough. It can also be said that the exhaust ventilation channel 334 is configured to allow the second passing air 612 to be mixed with the ventilation exhaust air 614 before the second passing air 612 passes through the second main heat exchanger 342. Preferably, the second main heat exchanger 342 is arranged such that an air-passing direction of the second main heat exchanger 342 is inclined with respect to an extending direction of the second main air channel 332.

The second sub heat exchanger 343 is disposed in the exhaust ventilation channel 334. The second sub heat exchanger 343 is disposed on a downstream side of the total heat exchanger 344 in the direction from the return-air inlet 321 to the exhaust-air outlet 324 (i.e. on the outlet side of the second air paths of the total heat exchanger 344). More specifically, the second sub heat exchanger 343 is arranged in the second main air channel 332 so as to cover the above-mentioned opening formed between the OA separator 313 and the EA separator 314 (i.e. to cover the outlet of the second air paths of the total heat exchanger 344).

Thus, the total heat exchanger 344, the second sub heat exchanger 343 and the second main heat exchanger 342 are arranged in series in this order along a direction of airflow of the ventilation exhaust air 614. It can be said that the second sub heat exchanger 343 is arranged so as to allow the ventilation exhaust air 614 to pass therethrough and prevent the second passing air 612 from passing therethrough, while coming into contact with at least a part of the second passing air 612. It can also be said that the second sub heat exchanger 343 is arranged such that a flow ratio of the ventilation exhaust air 614 with respect to the second passing air 612 is higher in the second sub heat exchanger 343 than in the second main heat exchanger 342.

The exhaust ventilation channel 334 further has an exhaust bypass channel 335 within the housing 301. The exhaust bypass channel 335 is substantially formed by the above-mentioned the inner aperture 315 of the EA separator 314 that is close to the exhaust-air outlet 324.

The exhaust bypass channel 335 is configured to allow air to flow therein from the return-air inlet 321 towards the exhaust-air outlet 324 without passing through any one of the first heat exchanger 341, the total heat exchanger 344 and the second main heat exchanger 342. The air that has been taken in through the return-air inlet 321 and to be discharged through the exhaust-air outlet 324 without passing through the total heat exchanger 344 (i.e. by passing through the exhaust bypass channel 335) is hereinafter referred to as "the exhaust bypass air 615." As indicated by one of dashed-dotted arrows in Fig. 3, the exhaust bypass air 615 flows a part of the first main air channel 331, the exhaust bypass channel 335, and then a part of the second main air channel 332. It can be said that the exhaust bypass air 615 is a part of the ventilation exhaust air 614.

The air-conditioner 300 further has a first fan 345, a second fan 346, a third fan 347, a first main damper 351, a second main damper 352, a second sub damper 353 and an exhaust bypass damper (an exhaust damper) 354 each of which is a motor damper.

The first fan 345 is disposed in the first main air channel 331 so as to cover the supply-air outlet 322, preferably from the inside of the housing 301. The first fan 345 is configured to draw air inside the housing 301 towards the supply-air outlet 322.

The second fan 346 is disposed in the second main air channel 332 so as to cover the exhaust-air outlet 324, preferably from the inside of the housing 301. The second fan 346 is configured to draw air inside the housing 301 towards the exhaust-air outlet 324.

The third fan 347 is disposed in the supply ventilation channel 333, i.e. between the outside-air inlet 323 and the total heat exchanger 344. The third fan 347 is configured to draw air from the outside-air inlet 323 towards the supply-air outlet 322 via the first air paths of the total heat exchanger 344.

The first main damper 351 is disposed in the first main air channel 331 between the return-air inlet 321 and the first heat exchanger 341. More specifically, the first main damper 351 is arranged between the point where the first main air channel 331 and the exhaust ventilation channel 334 diverge and the point where the first main air channel 331 and the supply ventilation channel 333 merge. Thus, the first main damper 351 is configured to regulate a flow of the first passing air 611. It should be noted that regulating a flow of air in this embodiment may include regulating a flow rate of the air in a stepwise or non-stepwise manner, regulating a flow ratio of the air with respect to other air in a stepwise or non-stepwise manner, and/or switching whether flowing the air or not.

The second main damper 352 is disposed in the second main air channel 332 between the outside-air inlet 323 and the first heat exchanger 341. More specifically, the second main damper 352 is arranged between the point where the second main air channel 332 and the supply ventilation channel 333 diverge and the point where the second main air channel 332 and the exhaust ventilation channel 334 merge. Thus, the second main damper 352 is configured to regulate a flow of the second passing air 612.

The second sub damper 353 is disposed in the supply ventilation channel 333 i.e. between the outside-air inlet 323 and the total heat exchanger 344. More specifically, the second sub damper 353 is arranged between the point where the second main air channel 332 and the supply ventilation channel 333 diverge and the third fan 347. Thus, the second sub damper 353 is configured to regulate a flow of the ventilation intake air 613.

The exhaust bypass damper 354 is disposed in the exhaust bypass channel 335 at the inner aperture 315. Thus, the exhaust bypass damper 354 is configured to regulate a flow of the exhaust bypass air 615.

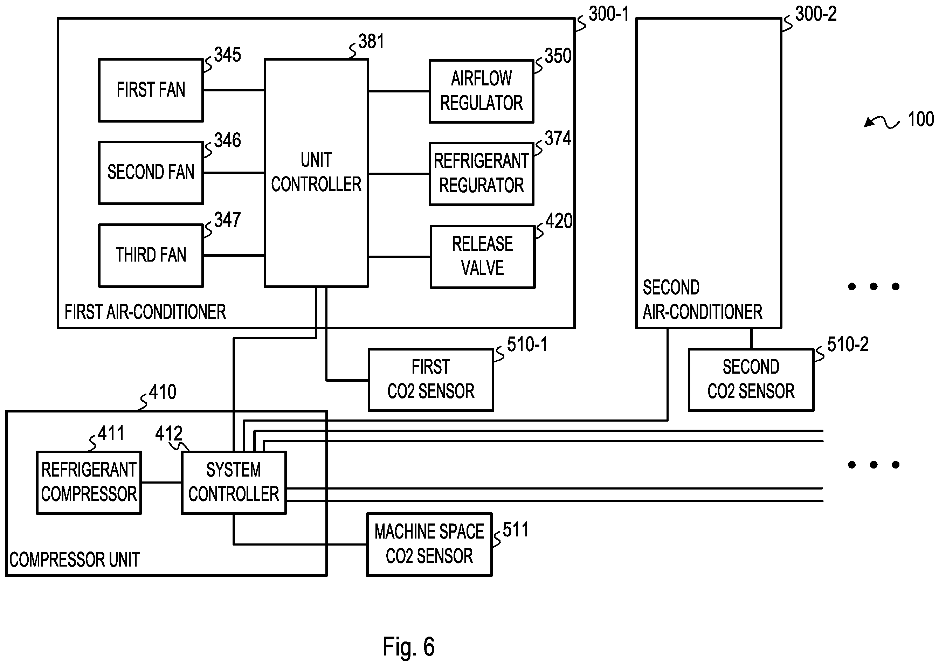

The regulation of one of the air flows would influence another one of the air flows. Thus, it can also be said that each of the first main damper 351, the second main damper 352, the second sub damper 353 and the exhaust bypass damper 354 is a part of an airflow regulator 350 (see Fig. 6) which is configured to regulate the air flows in the air-conditioner 300. Further, it can be said that each of the first fan 345, the second fan 346 and the third fan 347 also comprises the airflow regulator 350 for the same reason.

The air-conditioner 300 may further has an electrical pre-heater 348. The electrical pre-heater 348 is disposed in the supply ventilation channel 333 between the outside-air inlet 323 and the total heat exchanger 344. More specifically, the electrical pre-heater 348 is arranged between the third fan 347 and the inlet of the first air paths of the total heat exchanger 344. The electrical pre-heater 348 is configured to heat up air passing therethrough when the first heat exchanger 341 functions as a condenser.

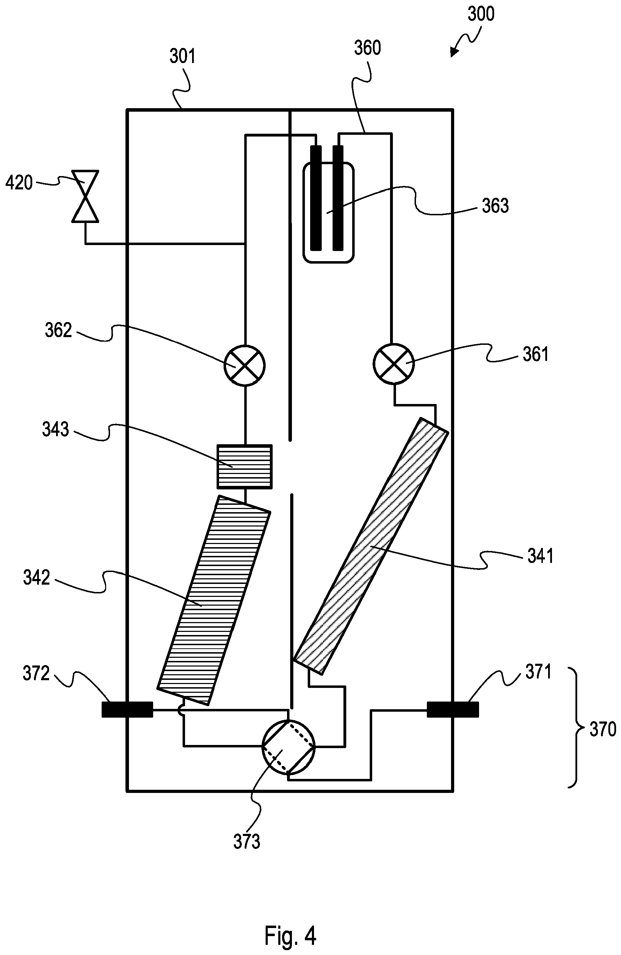

Fig. 4 is a schematic piping diagram of the air-conditioner 300.

The air-conditioner 300 has a pipe connecting mechanism 370, a liquid refrigerant pipe 360, first and second expansion valves 361, 362, a receiver 363 and a release valve 420.

The pipe connecting mechanism 370 is configured to connect each of the first heat exchanger 341 and the second heat exchanger 342, 343 (the second main heat exchanger 342 and the second sub heat exchanger 343) to the refrigerant compressor system 400 (see Fig. 1). Thus, the pipe connecting mechanism 370 is configured to connect the first heat exchanger 341 and the second heat exchanger 342, 343 to the compressor unit 410 which is disposed outside the housing 301 of any one of the air-conditioners 300, via the high-pressure gas refrigerant pipe 430 and the low-pressure gas refrigerant pipe 440.

The pipe connecting mechanism 370 includes a high-pressure gas refrigerant port 371, a low-pressure gas refrigerant port 372, and a four-way valve 373 as a switching mechanism.

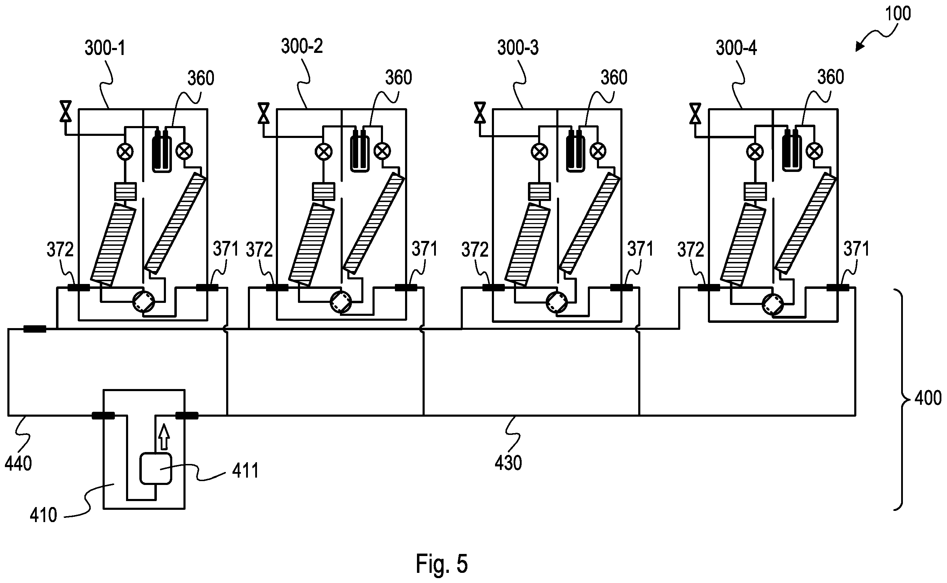

The high-pressure gas refrigerant port 371 is configured to connect the four-way valve 373 to a high-pressure gas refrigerant pipe 430 (see Fig. 5) of the refrigerant compressor system 400. The low-pressure gas refrigerant port 372 is configured to connect the four-way valve 373 to a low-pressure gas refrigerant pipe 440 (see Fig. 5) of the refrigerant compressor system 400.

The four-way valve 373 may be a motor valve with four pipe connecting ports. The four-way valve 373 is connected to each of the first heat exchanger 341 and the second heat exchanger 342, 343. Thus, the four-way valve 373 is configured to switch the state of the air-conditioner 300 between a cooling mode connection state and a heating mode connection state.

Here, the cooling mode connection state is a state in which the first heat exchanger 341 is connected to the low-pressure gas refrigerant pipe 440 and the second heat exchanger 342, 343 is connected to the high-pressure gas refrigerant pipe 430. With the cooling mode connection state, a cooling operation can be achieved in the air-conditioner 300. The cooling operation is an operation in which the first heat exchanger 341 functions as an evaporator of a heat pump circuit and the second heat exchanger 342, 343 functions as a condenser of a heat pump circuit.

Whereas, the heating mode connection state is a state in which the first heat exchanger 341 is connected to the high-pressure gas refrigerant pipe 430 and the second heat exchanger 342, 343 is connected to the low-pressure gas refrigerant pipe 440. With the heating mode connection state, a heating operation can be achieved in the air-conditioner 300. The heating operation is an operation in which the first heat exchanger 341 functions as a condenser of a heat pump circuit and the second heat exchanger 342, 343 functions as an evaporator of a heat pump circuit.

The liquid refrigerant pipe 360 connects the second main heat exchanger 342, the second sub heat exchanger 343 and the first heat exchanger 341 in series in this order, on the opposite side with respect to the side in which the four-way valve 373 is connected to the first heat exchanger 341 and the second heat exchanger 342, 343. Thus, the liquid refrigerant pipe 360 is configured such that refrigerant flows in the second main heat exchanger 342, the second sub heat exchanger 343 and the first heat exchanger 341 in series in this order and/or in the reverse order.

Hence, the first heat exchanger 341, the second heat exchanger 342 343, the refrigerant compressor system 400, and the liquid refrigerant pipe 360 form a heat pump circuit.

Here, the term "a heat pump circuit" means a system configured to transfer heat energy from an ambient region of an evaporator to an ambient region of a condenser by circulating refrigerant as heat medium between the evaporator and the condenser. The "heat pump circuit" may have at least a refrigerant compressor, a condenser, an expansion valve, and an evaporator connected in series in this order. The refrigerant compressor is configured to pressurize and circulate the refrigerant through the refrigerant circuit. The condenser is configured to cause heat release by the refrigerant discharged from the refrigerant compressor. The expansion valve is configured to cause depressurization of the refrigerant discharged from the condenser. The evaporator is configured to cause heat absorption by the refrigerant discharged from the expansion valve and send the refrigerant towards the refrigerant compressor.

The first and second expansion valves 361, 362 are disposed in the liquid refrigerant pipe 360. The first and second expansion valves 361, 362 may be solenoid valves. The first expansion valve 361 is arranged closer to the first heat exchanger 341 than the second expansion valve 362 to control an amount of refrigerant released into the first heat exchanger 341 when the first heat exchanger 341 functions as an evaporator. The second expansion valve 362 is arranged closer to the second heat exchanger 342, 343 than the first expansion valve 361 to control an amount of refrigerant released into the second heat exchanger 342, 343 when the second heat exchanger 342, 343 functions as an evaporator.

The receiver 363 is disposed in the liquid refrigerant pipe 360 between the first expansion valve 361 and the second expansion valve 362. The receiver 363 is configured to absorb fluctuations in amount of refrigerant circulating in the heat pump circuit.

Thus, the first heat exchanger 341 and the second main heat exchanger 342 can function a set of a condenser and an evaporator in the same refrigerant circuit. Not only that, function of each of the first heat exchanger 341 and the second main heat exchanger 342 can switch between an evaporator and a condenser.

It should be noted that the second sub heat exchanger 343 is configured to flow refrigerant therein that has flown through the second main heat exchanger 342 when the second main heat exchanger 342 functions as a condenser. Moreover, the second main heat exchanger 342 is configured to flow refrigerant therein that has flown through the second sub heat exchanger 343 when the second main heat exchanger 342 functions as an evaporator.

The release valve 420 may be a solenoid valve with a function as a safety valve. The release valve 420 is connected to the liquid refrigerant pipe 360 and configured to discharge the refrigerant in the heat pump circuit from the liquid refrigerant pipe 360 by opening. It is preferable that the release valve 420 is arranged in the outside 230 of the building 200 (see Fig. 1). In this case, a pipe may be branched from the liquid refrigerant pipe 360 to the outside 230 for connecting the release valve 420 in the outside 230 to the liquid refrigerant pipe 360.

Fig. 5 is a schematic piping diagram of the air-conditioning system 100.

As mentioned above, the air-conditioning system 100 includes the plurality of the air-conditioners 300 and the refrigerant compressor system 400. The refrigerant compressor system 400 includes the compressor unit 410, the high-pressure gas refrigerant pipe 430, and the low-pressure gas refrigerant pipe 440.

The compressor unit 410 has at least one of refrigerant compressor 411. The refrigerant compressor 411 is configured to take in a refrigerant from the suction side, compress the refrigerant taken in, and discharge the compressed refrigerant from the discharge side. The compressor unit 410 may have a housing accommodating substantially all the other components of the compressor unit 410.

The high-pressure gas refrigerant pipe 430 is connected to the discharge side of the refrigerant compressor 411. The high-pressure gas refrigerant pipe 430 is branched towards and connected to the air-conditioners 300. The branched high-pressure gas refrigerant pipes 430 are connected to the high-pressure gas refrigerant ports 371 of the air-conditioners 300, respectively. The low-pressure gas refrigerant pipe 440 is connected to the suction side of the refrigerant compressor 411. The low-pressure gas refrigerant pipe 440 is branched towards and connected to the air-conditioners 300. The branched low-pressure gas refrigerant pipes 440 are connected to the low-pressure gas refrigerant ports 372 of the air-conditioners 300, respectively.

Hence, each of the air-conditioners 300 and the refrigerant compressor system 400 form a heat pump circuit. At least the compressor unit 410 is shared by the plurality of air-conditioners 300. In addition, at least a part of the high-pressure gas refrigerant pipe 430 and a part of the low-pressure gas are also shared by the plurality of air-conditioners 300. Thus, a two-pipe system of refrigerant piping is achieved.

Particularly when carbon dioxide refrigerant is used, refrigerant piping needs to be thick since the pressure of refrigerant is relatively high. On this point, by using a two-pipe system like the above, it is possible to reduce the total length of piping and simplify the piping connections. Hence, the effect such as cost reduction and space reduction of piping becomes more remarkable.

The compressor unit 410 may have an accumulator (not shown) that is fluidly connected the gas refrigerant pipe and configured to separate the liquid refrigerant and the gas refrigerant.

Fig. 6 is a block diagram indicating a functional configuration of the air-conditioning system 100.

As mentioned above, the air-conditioning system 100 includes the room CO2 sensors 510, the machine space CO2 sensor 511, the air-conditioners 300, and the compressor unit 410. The air-conditioner 300 has the airflow regulator 350, a refrigerant regulator 374 and a unit controller 381. The compressor unit 410 has the refrigerant compressor 411, a system controller 412 and a system storage 413.

The room CO2 sensor 510 is configured to detect a carbon dioxide level in the predetermined space 220 and send the CO2 information indicating the detected carbon dioxide level to the unit controller 381. The machine space CO2 sensor 511 is configured to detect a carbon dioxide level in the machine space 210 and send the CO2 information indicating the detected carbon dioxide level to the system controller 412. The carbon dioxide level may be a value of carbon dioxide concentration in the air, or an index value among predetermined values corresponding to predetermined ranges of the carbon dioxide concentration.

The room CO2 sensor 510 may send the CO2 information directly to the unit controller 381 of the corresponding air-conditioner 300 and/or to the system controller 412. The room CO2 sensor 510 may also send the CO2 information indirectly to the unit controller 381 via the system controller 412, and/or indirectly to the system controller 412 via the unit controller 381. The same may be applied to the machine space CO2 sensor 511. Each of the room CO2 sensors 510 and the machine space CO2 sensor 511 may send the CO2 information by a wired communication and/or a wireless communication.

The airflow regulator 350 includes the first main damper 351, the second main damper 352, the second sub damper 353 and the exhaust bypass damper 354 (see Fig. 3). Thus, the airflow regulator 350 is configured to regulate a flow of each of the first passing air 611, the second passing air 612, the ventilation intake air 613, the ventilation exhaust air 614 and the exhaust bypass air 615.

The refrigerant regulator 374 is configured to regulate a circulation amount of refrigerant in the second heat exchanger 342, 343, the liquid refrigerant pipe 360 and the first heat exchanger 341. The refrigerant regulator 374 is also configured to switch whether carbon dioxide refrigerant flows in the above elements. It should be noted that regulating a circulation amount of refrigerant in this embodiment may include regulating a flow rate of the refrigerant, and/or switching whether flowing the refrigerant or not.

The refrigerant regulator 374 may include solenoid valves (not shown) arranged in the heat pump circuit and close to the high-pressure gas refrigerant port 371 and the low-pressure gas refrigerant port 372, respectively, and/or the four-way valve 373 (see Fig. 4). The refrigerant regulator 374 may also be configured to control an open degree of each of the first expansion valve 361 and the second expansion valve 362. The refrigerant regulator 374 may also control a rotational frequency of the refrigerant compressor 411 by sending an instruction signal to the system controller 412 and/or the unit controller 381.

The unit controller 381 is configured to control the operation of the air-conditioner 300. More specifically, the unit controller 381 is configured to control at least the first fan 345, the second fan 346, the third fan 347, the airflow regulator 350 and the refrigerant regulator 374. Thereby, the unit controller 381 switches the state of the air-conditioner 300 among a plurality of predetermined operation states of the air-conditioner 300. The details about the predetermined operation states are explained later. The unit controller 381 is also configured to acquire CO2 information sent from at least the corresponding room CO2 sensor 510. It is preferable that the unit controller 381 is also configured to acquire CO2 information sent from the other room CO2 sensors 510 and the machine space CO2 sensor 511. The unit controller 381 is configured to perform the above operation control according to the acquired CO2 information.

The unit controller 381 includes an arithmetic circuit such as a CPU (Central Processing Unit), a work memory used by the CPU, such as a RAM (Random Access Memory), and a recording medium storing control programs and information used by the CPU, such as a ROM (Read Only Memory), although they are not shown. Thus, unit controller 381 is configured to perform information processing and signal processing by the CPU executing the control programs to control the operation of the air-conditioner 300.

The system controller 412 is configured to control the operation of the air-conditioning system 100, including the output (rotation speed) of the refrigerant compressor 411. The system controller 412 is configured to acquire the CO2 information sent from each of the room CO2 sensors 510 and the machine space CO2 sensor 511, and control the release valves 420 according to the CO2 information. The system controller 412 includes an arithmetic circuit, a work memory used by the CPU, and a recording medium storing control programs and information used by the CPU. Thus, the system controller 412 is configured to perform information processing and signal processing by the CPU executing the control programs to control the operation of the compressor unit 410.

### Operation States of Air-conditioner

The above-mentioned predetermined operation states of the air-conditioner 300 includes a heat-reclaiming standard state, a no-heat-reclaiming standard state, a low-ventilation state, an air-conditioning state, a low-cooling state, a free-cooling state and a refrigerant-evacuation state.

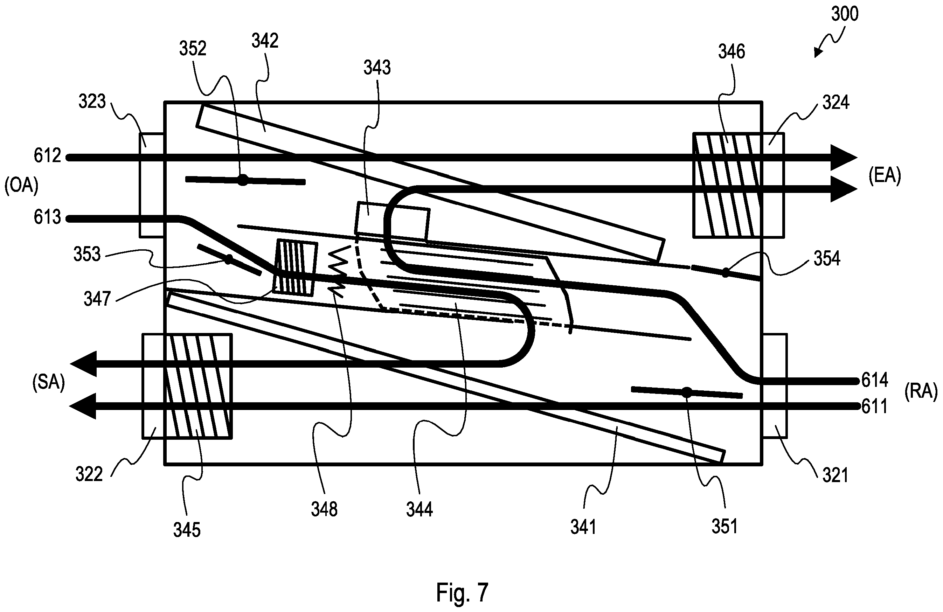

The details of these operation states are explained hereinafter with reference to the drawings Figs. 7 to 13. In these figures, the narrow-broken lines indicates that the corresponding components are not in operation, the arrows substantially indicate the paths and directions of major air flows. The explanations on the air flows are made on the premise that the predetermined space 220 is substantially airtight. It should be noted that there may also be minor air flows flowing in the air-conditioner 300 other than the depicted air flows due to air leak or the like.

Fig. 7 is a schematic diagram indicating the heat-reclaiming standard state of the air-conditioner 300.

As shown in Fig. 7, the heat-reclaiming standard state is a state in which the first passing air 611, the second passing air 612, the ventilation intake air 613 and the ventilation exhaust air 614 are allowed to flow, the exhaust bypass air 615 (see Fig. 3) is prevented from flowing, the first fan 345 and the second fan 346 are allowed to operate, and the refrigerant is allowed to flow in the first heat exchanger 341, the second sub heat exchanger 343 and the second main heat exchanger 342. The third fan 347 may also be allowed to operate. The pre-heater 348 may be allowed to operate when the air-conditioner 300 is in the heating mode connection state, i.e. when the air-conditioner 300 performs a heating of the predetermined space 220.

In this heat-reclaiming standard state, the air-conditioner 300 can perform an air-conditioning and a ventilation of the predetermined space 220 while reclaiming at least a part of hot heat and/or cold heat of the ventilation exhaust air 614 for heating up and/or cooling down the ventilation intake air 613.

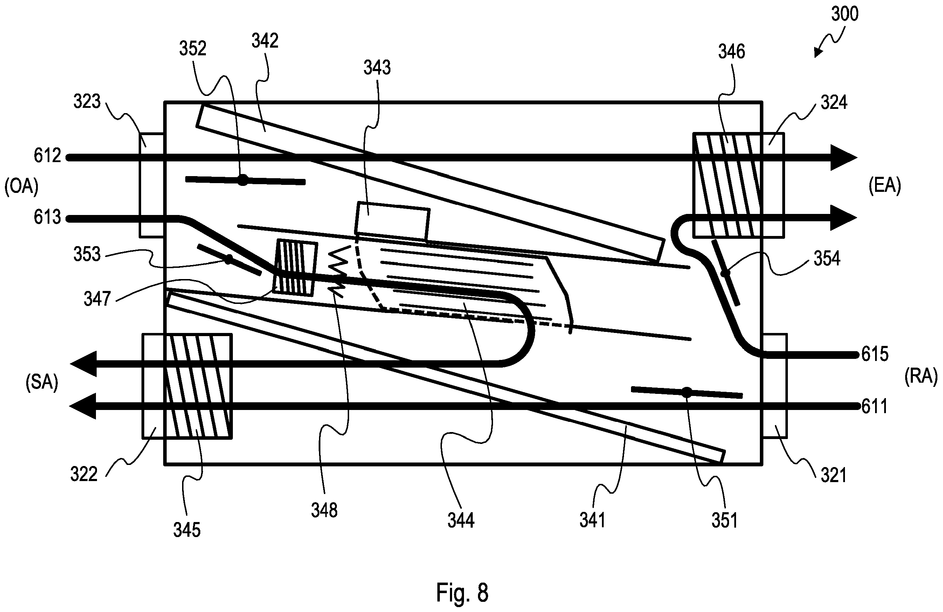

Fig. 8 is a schematic diagram indicating the no-heat-reclaiming standard state of the air-conditioner 300.

As shown in Fig. 8, the no-heat-reclaiming standard state is a state in which the first passing air 611, the second passing air 612, the ventilation intake air 613 and the exhaust bypass air 615 is allowed to flow, the first fan 345 and the second fan 346 are allowed to operate, and the refrigerant is allowed to flow in the first heat exchanger 341, the second sub heat exchanger 343 and the second main heat exchanger 342. The third fan 347 may also be allowed to operate. The pre-heater 348 may be allowed to operate when the air-conditioner 300 performs a heating of the predetermined space 220. Although the ventilation exhaust air 614 (see Fig. 3) would flow, the flow is small since the frictional resistance by the total heat exchanger 344, the second sub heat exchanger 343 and the second main heat exchanger 342 is much higher than the frictional resistance by the opening exhaust bypass damper 354.

In this no-heat-reclaiming standard state, the air-conditioner 300 can perform an air-conditioning and a ventilation of the predetermined space 220 while flowing the exhaust bypass air 615. It can also be said that at least a part of the ventilation exhaust air 614 is bypassed so as not to pass through the total heat exchanger 344.

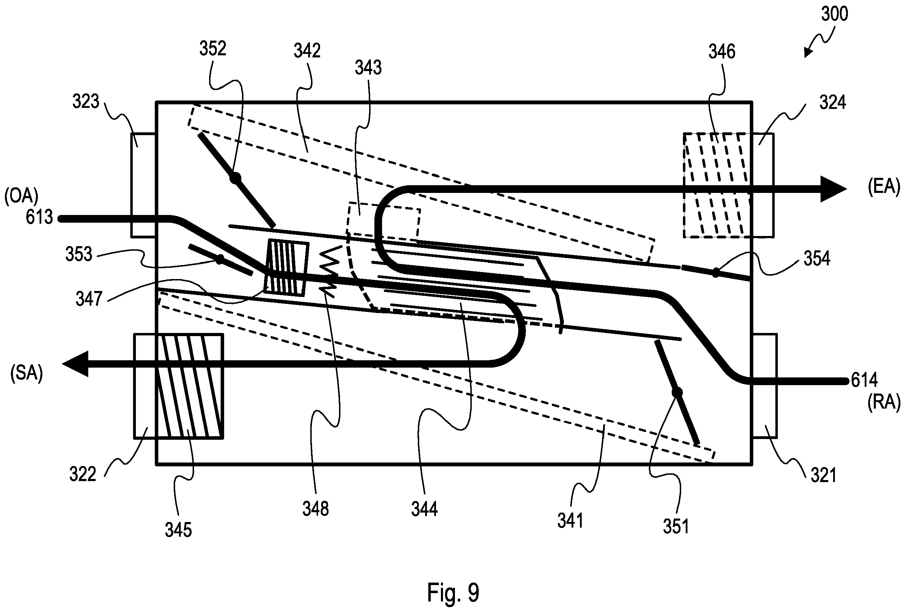

Fig. 9 is a schematic diagram indicating the low-ventilation state of the air-conditioner 300.

As shown in Fig. 9, the low-ventilation state is a state in which the ventilation exhaust air 614 and the ventilation intake air 613 are allowed to flow, the first passing air 611, the second passing air 612 and the exhaust bypass air 615 are prevented from flowing, the first fan 345 is allowed to operate, and the refrigerant is prevented from flowing in the first heat exchanger 341, the second sub heat exchanger 343 and the second main heat exchanger 342. The third fan 347 and the pre-heater 348 may also be allowed to operate. Since the required ventilation performance is low, the second fan 346 may be stopped.

In this low-ventilation state, the air-conditioner 300 can perform a ventilation of the predetermined space 220 while reclaiming at least a part of hot heat and/or cold heat of the ventilation exhaust air 614 for heating up and/or cooling down the ventilation intake air 613.

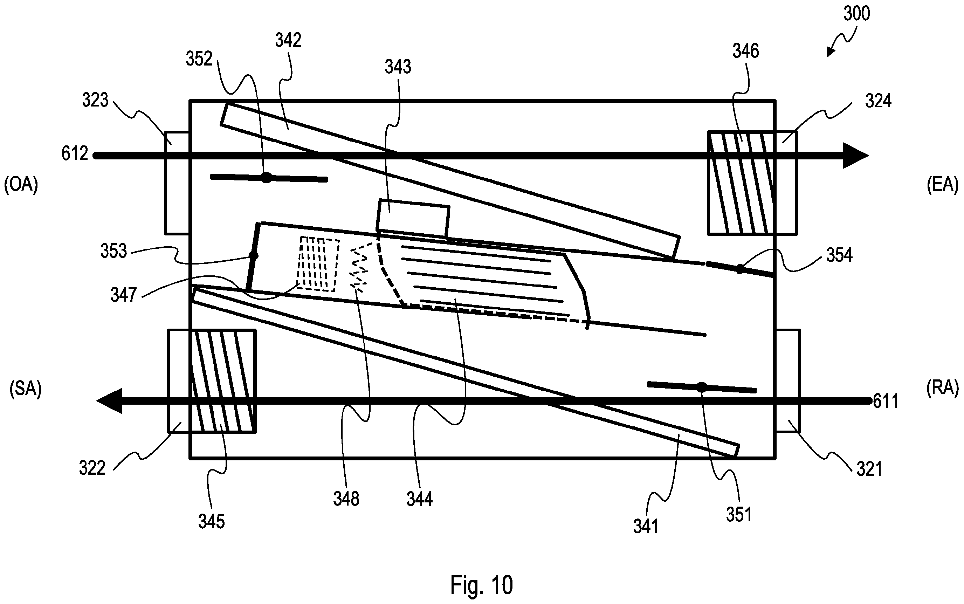

Fig. 10 is a schematic diagram indicating the air-conditioning state of the air-conditioner 300.

As shown in Fig. 10, the air-conditioning state is a state in which the first passing air 611 and the second passing air 612 are allowed to flow, the ventilation intake air 613, the ventilation exhaust air 614 and the exhaust bypass air 615 are prevented from flowing, the first fan 345 and the second fan 346 are allowed to operate, and the refrigerant is allowed to flow in the first heat exchanger 341, the second sub heat exchanger 343 and the second main heat exchanger 342. It is preferable that the third fan 347 and the electrical pre-heater 348 are stopped.

In this air-conditioning state, the air-conditioner 300 can perform an air-conditioning of the predetermined space 220 without taking in the outside air into the predetermined space 220. Here, the outside air means an air which is drawn into the air-conditioner 300 from the outside-air inlet 323.

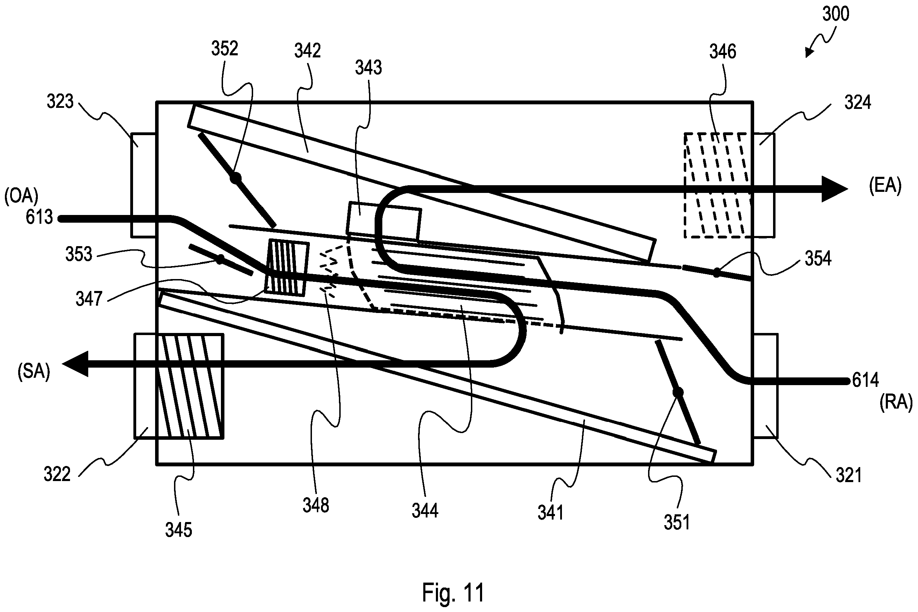

Fig. 11 is a schematic diagram indicating the low-cooling state of the air-conditioner 300.

As shown in Fig. 11, the low-cooling state is a state in which the ventilation intake air 613 and the ventilation exhaust air 614 are allowed to flow, the first passing air 611, the second passing air 612 and the exhaust bypass air 615 are prevented from flowing, the first fan 345 is allowed to operate, and the refrigerant is allowed to flow in the first heat exchanger 341, the second sub heat exchanger 343 and the second main heat exchanger 342. The third fan 347 may also be allowed to operate. Since the required ventilation performance is low, the second fan 346 may be stopped.

In this low-cooling state, the air-conditioner 300 can perform a ventilation of the predetermined space 220 while flowing the ventilation exhaust air 614. Thus, air-conditioning can be performed without using the first passing air 611 and the second passing air 612.

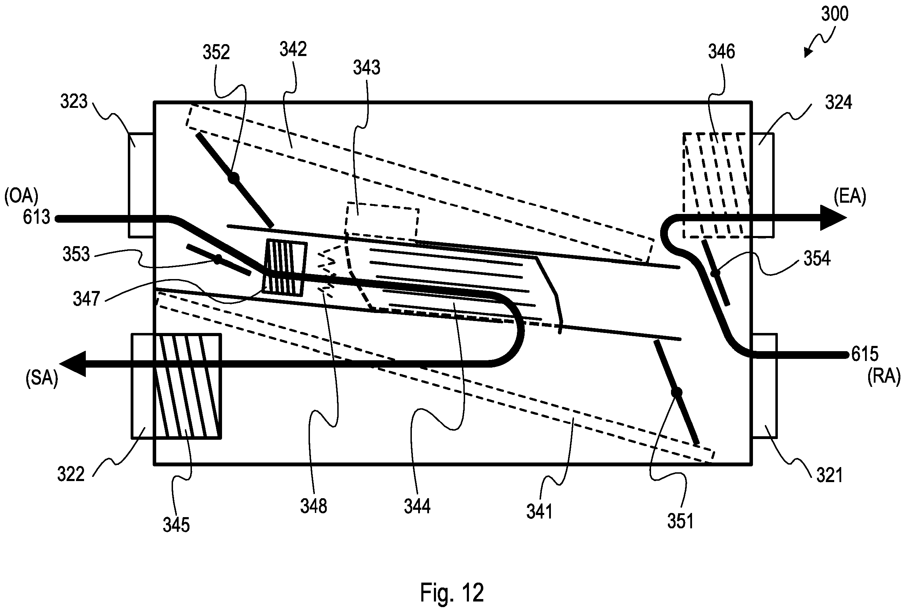

Fig. 12 is a schematic diagram indicating the free-cooling state of the air-conditioner 300.

As shown in Fig. 12, the free-cooling state is a state in which the first passing air 611 and the second passing air 612 are prevented from flowing, the ventilation intake air 613 and the exhaust bypass air 615 are allowed to flow, the first fan 345 is allowed to operate, and the refrigerant is prevented from flowing in the first heat exchanger 341, the second sub heat exchanger 343 and the second main heat exchanger 342. The third fan 347 may also be allowed to operate. Since the required ventilation performance is low, the second fan 346 may be stopped. The flow of the ventilation exhaust air 614 (see Fig. 3) is small as mentioned above.

In this free-cooling state, the air-conditioner 300 can perform a free cooling and a ventilation of the predetermined space 220 while flowing the exhaust bypass air 615.

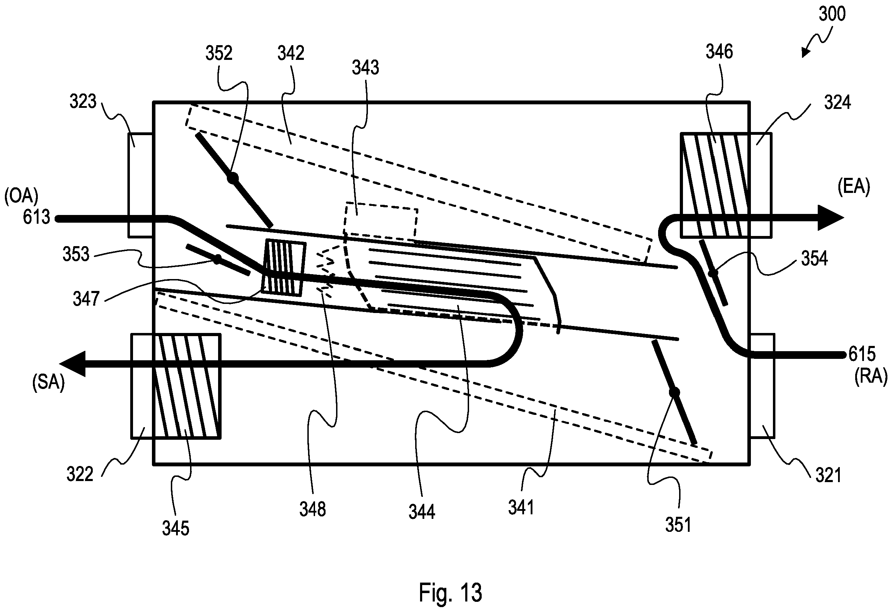

Fig. 13 is a schematic diagram indicating the refrigerant-evacuation state of the air-conditioner 300.

As shown in Fig. 13, the refrigerant-evacuation state is a state in which the ventilation intake air 613 and the exhaust bypass air 615 are allowed to flow, the first passing air 611 and the second passing air 612 are prevented from flowing, the second fan 346, the third fan 347 and the first fan 345 operate, and the refrigerant is prevented from flowing in the first heat exchanger 341, the second sub heat exchanger 343 and the second main heat exchanger 342. It can be said that at least a part of the ventilation exhaust air 614 is allowed to flow into the exhaust bypass channel 335. The flow of the ventilation exhaust air 614 (see Fig. 3) is small as mentioned above.

In this refrigerant-evacuation state, the air-conditioner 300 can perform a forcible ventilation of the predetermined space 220 while flowing the exhaust bypass air 615.

### Switching of Operation States

The unit controller 381 of the air-conditioner 300 is configured to switch the state of the air-conditioner 300 among the above-mentioned predetermined operation states according to a designation of the operation state of the air-conditioner 300 and/or a condition related to the predetermined space 220. Such a designation and/or condition may be the target temperature of the predetermined space 220, the actual temperature of the predetermined space 220, the temperature of the outside air, whether or not the predetermined space 220 is in use, or the like. The designation of the operation state of the air-conditioner 300 can be made by a user via a user interface such as a touch panel.

It is preferable that the unit controller 381 controls the first fan 345, the second fan 346, the third fan 347, the airflow regulator 350 and the refrigerant regulator 374 such that the refrigerant-evacuation state (Fig. 13) is achieved when the carbon dioxide level indicated by the CO2 information is higher than or equal to a first predetermined threshold. The first predetermined threshold may be the carbon dioxide level with which leakage of carbon dioxide refrigerant is suspected.

It is also preferable that the unit controller 381 switch a state of the air-conditioner 300 to the refrigerant-evacuation state (Fig. 13) on condition that the carbon dioxide level has kept higher than or equal to the first predetermined threshold for a predetermined amount of time.

It is preferable that the unit controller 381 controls the first fan 345, the second fan 346, the third fan 347, the airflow regulator 350 and the refrigerant regulator 374 such that the low-ventilation state (Fig. 9) is achieved when the carbon dioxide level is lower than the first predetermined threshold and higher than or equal to a second predetermined threshold. The second predetermined threshold is lower than the first predetermined threshold. The second predetermined threshold may be the minimum carbon dioxide level undesirable for the human body.

It can be said that the unit controller 381 is configured to switch at least a standard state, a ventilation state and the air-conditioning state (Fig. 10). The standard state is a state in which the first passing air 611, the second passing air 612, the ventilation intake air 613 and the ventilation exhaust air 614 are allowed to flow, the first fan 345 and the second fan 346 are allowed to operate, and the refrigerant is allowed to flow in the first heat exchanger 341 and the second main heat exchanger 342. The ventilation state is a state in which the first passing air 611 and the second passing air 612 are prevented from flowing, the ventilation intake air 613 and the ventilation exhaust air 614 are allowed to flow, the first fan 345 is allowed to operate, and the refrigerant is prevented from flowing in the first heat exchanger 341 and the second main heat exchanger 342.

In this case, the above-mentioned heat-reclaiming standard state (Fig. 7) and above-mentioned no-heat-reclaiming standard state (Fig. 8) are included in the standard state, and the above-mentioned low-ventilation state (Fig. 9), free-cooling state (Fig. 12), and refrigerant-evacuation state (Fig. 13) are included in the ventilation state.

It can also be said that the unit controller 381 is configured to, in the above ventilation state, switch at least a normal ventilation state in which the exhaust bypass air 615 is prevented from flowing and the first fan 345 is allowed to operate, and the refrigerant-evacuation state (Fig. 13). In this case, the above-mentioned low-ventilation state (Fig. 9) may be included in the normal ventilation state.

It is preferable that the unit controller 381 selects the no-heat-reclaiming standard state (Fig. 8) and the low-cooling state (Fig. 11) when the air-conditioner 300 is in the cooling mode connection state, i.e. when the air-conditioner 300 performs a cooling of the predetermined space 220, and the cooling load is relatively low.

It is preferable that the unit controller 381 selects the free-cooling state (Fig. 12) on condition the air-conditioner 300 performs a cooling of the predetermined space 220, and the temperature of the outside air is much lower than the temperature of the inside air in the predetermined space 220.

When it has been detected that the total heat exchanger 344 is malfunctioning or predicted to malfunction due to freezing, clogging or the like, the unit controller 381 may select an operation state in which the exhaust bypass damper 354 is open, e.g. the no-heat-reclaiming standard state (Fig. 8), the low-cooling state (Fig. 9), and the refrigerant-evacuation state (Fig. 13). It is possible to detect such situation by using a temperature sensor and/or a pressure sensor disposed to or near the total heat exchanger 344.

It is preferable that the unit controller 381 outputs alert information indicating a possibility of leakage of carbon dioxide refrigerant when the carbon dioxide level is higher than or equal to the first predetermined threshold or a third predetermined threshold. The third predetermined threshold may be either higher or lower than the first predetermined threshold. The alert information can be in a form of a sound, a voice message, a light, an image, a vibration, an electric signal sent to an external information processing device, or the like.

The unit controller 381 is further configured to, when the carbon dioxide level is higher than or equal to the first predetermined threshold or a fourth predetermined threshold, control the release valve 420 (see Fig. 4) so as to discharge the refrigerant in the heat pump circuit to the outside 230 of the predetermined space 220. The fourth predetermined threshold may be either higher or lower than the first predetermined threshold. This control may be performed by the system controller 412 of the compressor unit 410 (see Fig. 6)

The critical temperature of carbon dioxide (CO2) as refrigerant is relatively low (31 °C). When an outdoor heat exchanger of an air-conditioner functions as a condenser at high outdoor temperatures, the refrigerant in the outdoor heat exchanger becomes "transcritical." This means that the refrigerant cannot condense to liquid but remains in the gas stage, and would make the amount of heat rejected in the outdoor heat exchanger much smaller than when condensing occurs (as in a "subcritical" condition). As a result, a system using carbon dioxide refrigerant tends to have lower efficiency than a similar system using other refrigerant such as R410A or other HFC. On this point, with the air-conditioner 300, the heat exchange efficiency can be improved in spite of using carbon dioxide refrigerant since the second heat exchanger 342, 343 exchanges heat with the ventilation exhaust air 614 that is cooler than the outside air. Hence, the air-conditioner 300 according to the present embodiment is suitable.

It is preferable that the air-conditioner 300 is configured to switch its operation state such that the temperature of the air which goes through the second heat exchanger (the second main heat exchanger 342 and/or the second sub heat exchanger 343) is under the supercritical temperature of the carbon dioxide refrigerant flowing in the second heat exchanger.

For instance, during the air-conditioner 300 is in the air-conditioning state (see Fig. 10), the unit controller 381 is configured to acquire the temperature of the air which goes through the second heat exchanger, and preferably, the temperature of the outside air and the temperature of the air in the predetermined space 220. The unit controller 381 controls the airflow regulator 350 to switch the operation state from the air-conditioning state to the heat-reclaiming standard state (see Fig. 7) if the acquired temperature is higher than or equal to the supercritical temperature of the carbon dioxide refrigerant flowing in the second heat exchanger. The value of the supercritical temperature of the carbon may be stored in the memory of the unit controller 381 in advance.

### Control of Air-pressure Balance

In addition, the unit controller 381 may be configured to control the airflow regulator 350 such that the air-pressure balance in the air-conditioner 30 is maintained to a predetermined balance. It is preferable that the air pressure in the predetermined space 220 is maintained higher than or equal to the air pressure of the outside 230 in order to prevent the outside air from coming into the predetermined space 220 via a door, a window or the like.

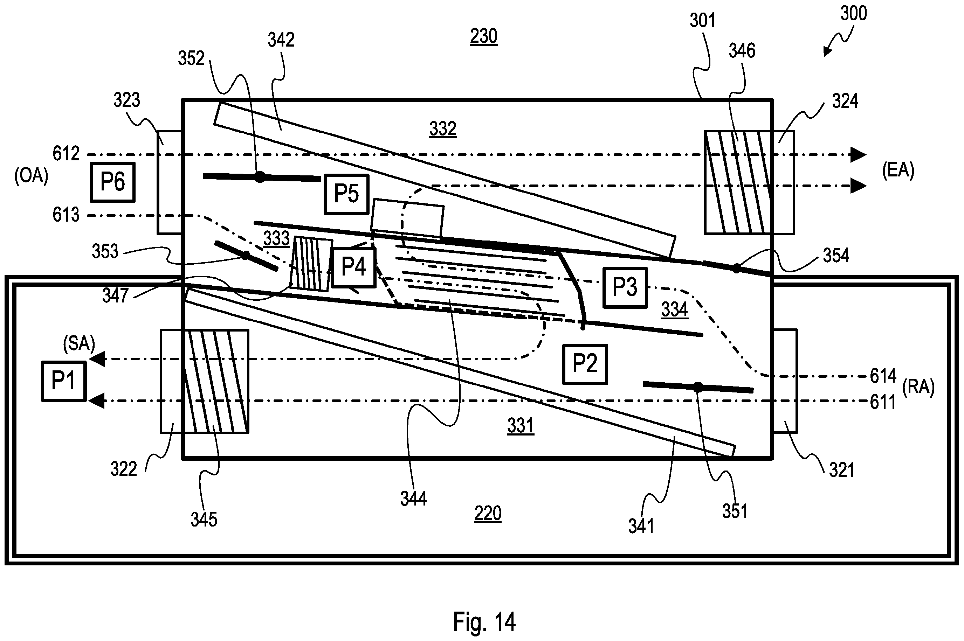

Fig. 14 is a schematic diagram for explaining pressure balances in the air-conditioner 300 and the surround thereof.

Here, first to sixth pressures P1 to P6 are defined for explaining the above air-pressure balance. The first pressure P1 is a value of an air pressure in the predetermined space 220, e.g. on the right downstream side of the supply-air outlet 322. The second pressure P2 is a value of an air pressure in the first main air channel 331, e.g. on the right upstream side of the first heat exchanger 341. The third pressure P3 is a value of an air pressure in the exhaust ventilation channel 334, e.g. on the right upstream side of the total heat exchanger 344. The fourth pressure P4 is a value of an air pressure in the supply ventilation channel 333, e.g. on the right upstream side of the total heat exchanger 344. The fifth pressure P5 is a value of an air pressure in the second main air channel 332, e.g. on the right upstream side of the second main heat exchanger 342. The sixth pressure P6 is a value of an air pressure in the outside 230, e.g. on the right upstream side of the outside-air inlet 323.

The air-conditioner 300 is configured to maintain an air-pressure balance in which the first pressure P1 is higher than any one of the second to sixth pressures P2 to P6, the fourth and sixth pressures P4, P6 are higher than any one of the second, third and fifth pressures P2, P3, P5, and the second and third pressures P2, P3 are higher than the fifth pressure P5.

The unit controller 381 may control the rotation speed of each of the first fan 345, the second fan 346 and the third fan 347 and the rotation angle of each of the first main damper 351, the second main damper 352, the second sub damper 353 and the exhaust bypass damper 354 so as to achieve the above air-pressure balance. For this, the air-conditioner 300 may have a plurality of air-pressure sensors.

### Operation of Air-conditioner

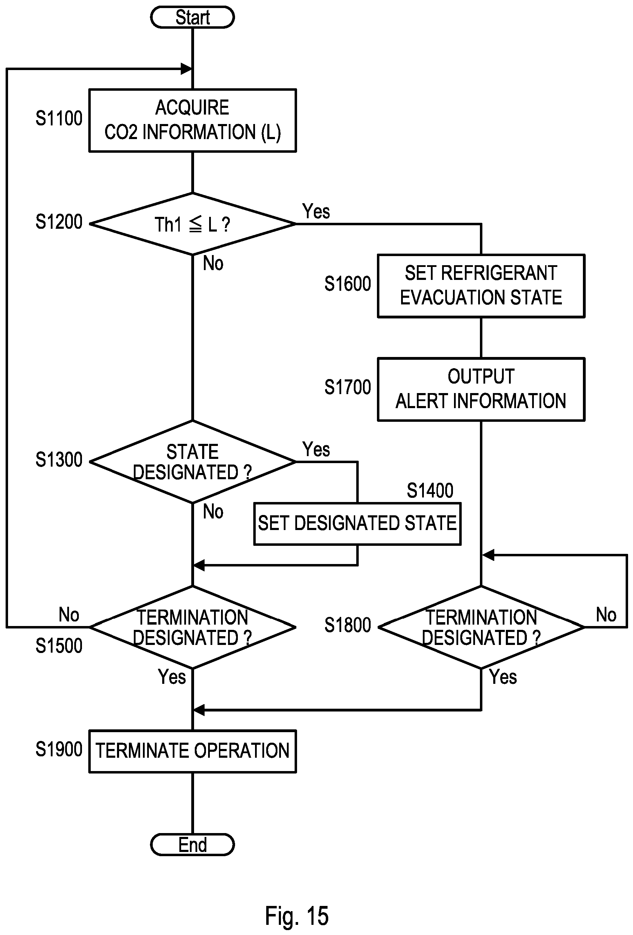

Fig. 15 is a flow chart indicating processes performed by the air-conditioner 300. The processes are executed by the unit controller 381 (see Fig. 6).

In a step S1100, the unit controller 381 acquires a CO2 information indicating the carbon dioxide level L in the predetermined space 220 from the room CO2 sensor 510. The unit controller 381 may send a request to the room CO2 sensor 510 and then receive the CO2 information as a reply, and/or passively receive the CO2 information that is sent by the room CO2 sensor 510 regularly.

In a step S1200, the unit controller 381 determines whether the carbon dioxide level L is higher than or equal to the first predetermined threshold Th1. If the carbon dioxide level L is lower than the first threshold Th1 (S1200: No), the unit controller 381 proceeds to a step S1300. If the carbon dioxide level L is higher than or equal to the first threshold Th1 (S1200: Yes), the unit controller 381 proceeds to a step S1600 explained later.

In the step S1300, the unit controller 381 determines whether an operation state has been designated. One of the above-mentioned operation states may be designated. The designation may be made by a user operation, another device, or the unit controller 381 itself according to the above-mentioned conditions. If an operation state has been designated (S1300: Yes), the unit controller 381 proceeds to a step S1400. If any operation state has not been designated (S1300: No), the unit controller 381 proceeds to a step S1500 explained later.

In the step S1400, the unit controller 381 sets the designated operation state to the air-conditioner 300. More specifically, the unit controller 381 controls the first fan 345, the second fan 346, the third fan 347, the airflow regulator 350 and the refrigerant regulator 374 such that the designated operation state is achieved.

In the step S1500, the unit controller 381 determines whether a termination of the operation by the unit controller 381 has been designated. The designation may be made by a user operation, another device, or the unit controller 381 itself. If the termination of the operation has not been designated (S1500: No), the unit controller 381 proceeds back to the step S1100. If the termination of the operation has been designated (S1500: Yes), the unit controller 381 proceeds to the step S1900 explained later.

In the step S1600, i.e. when the carbon dioxide level L is higher than or equal to the first threshold Th1, the unit controller 381 sets the refrigerant-evacuation state to the air-conditioner 300. More specifically, the unit controller 381 controls the first fan 345, the second fan 346, the third fan 347, the airflow regulator 350 and the refrigerant regulator 374 such that the refrigerant-evacuation state is achieved.

In a step S1700, the unit controller 381 outputs the alert information.

In a step S1800, the unit controller 381 determines whether a termination of the operation in the refrigerant-evacuation state has been designated. The designation may be made by a user operation, another device, or the unit controller 381 itself. If the termination of the operation has not been designated (S1800: No), the unit controller 381 repeats the determination in the step S1800. If the termination of the operation has been designated (S1800: Yes), the unit controller 381 proceeds to the step S1900.

In a step S1900, the unit controller 381 terminates its operation.

### Advantageous Effect

As described above, the air-conditioner 300 according to the present embodiment has the exhaust ventilation channel 334 configured to allow the ventilation exhaust air 614 to pass through the second heat exchanger 342, 343. The difference between temperature of air passing through the second heat exchanger 342, 343 and temperature of the refrigerant flowing in the second heat exchanger 342, 343 is increased by utilizing the ventilation exhaust air 614. Thus, performance of the air-conditioner 300 can be improved with a simple structure.

### Variations

The configuration of the air-conditioner 300 and the air-conditioning system 100 according to the present embodiment explained above may be modified. Some examples of such modifications are mentioned below. The each of modification examples may be combined with one or more of the other modification examples.

### Variations in Air Paths

The air-conditioner 300 may have further one or more of channels configured to allow air to flow therein, additionally to or instead of one or more of the above-mentioned channels.

For instance, the air-conditioner 300 may be configured to prevent the ventilation exhaust air 614 from passing through both the total heat exchanger 344 and the second heat exchanger more actively.

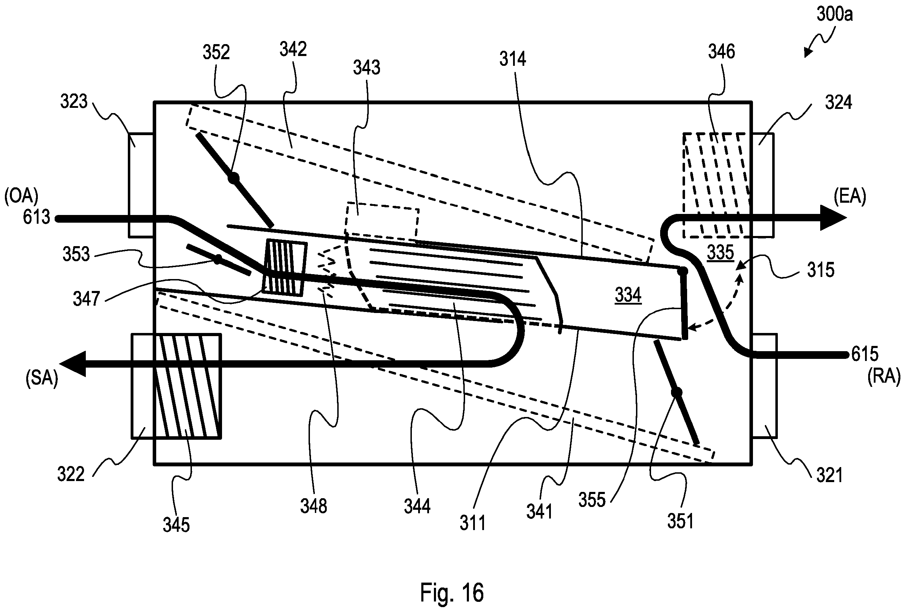

Fig. 16 is a schematic diagram indicating a schematic configuration of a first variation of the air-conditioner 300. The air-conditioner 300a as the first variation of the air-conditioner 300 may have substantially the same features as the air-conditioner 300 except for the features explained below.

The air-conditioner 300a has an exhaust switching damper (an exhaust damper) 355 which is a motor damper and controlled by the unit controller 381, instead of the exhaust bypass damper 354 (see Fig. 3). The exhaust switching damper 355 is disposed between the inner aperture 315 and the above-mentioned space formed between the RA separator 311 and the EA separator 314. The exhaust switching damper 355 is a part of the airflow regulator 350 (see Fig. 6).

The exhaust switching damper 355 is configured to rotate between a first angle and a second angle, as indicated by the dashed arrow in Fig. 16. The first angle is an angle at which the inner aperture 315 is closed by the exhaust switching damper 355 while the above-mentioned space is open with respect to the return-air inlet 321. The second angle is an angle at which the inner aperture 315 is open while the above-mentioned space is closed by the exhaust switching damper 355 with respect to the return-air inlet 321. Thus, the exhaust switching damper 355 is configured to switch the air path through which the ventilation exhaust air 614 primarily flows between the second air paths of the total heat exchanger 344 and the inner aperture 315. In other words, the exhaust switching damper 355 is configured to switch whether the ventilation exhaust air 614 goes through the second heat exchanger 342, 343.

For instance, during a cooling operation, the unit controller 381 is configured to acquire the temperature of the outside air, and determine whether a predetermined condition is met that the temperature of the outside air is higher than or equal to a predetermined threshold value. The unit controller 381 controls the exhaust switching damper 355 to close the inner aperture 315 if the above condition is met. Thereby, the ventilation exhaust air 614 goes through the total heat exchanger 344 and the second main heat exchanger 342. Meanwhile, the unit controller 381 controls the exhaust switching damper 355 to open the inner aperture 315 if the above condition is not met. Thereby, the ventilation exhaust air 614 is prevented from going through the total heat exchanger 344 and the second main heat exchanger 342. This state is substantially the same as the free-cooling state explained above by referring Fig. 12.

The air-conditioner 300 may also be configured to allow the ventilation exhaust air 614 to pass through the second heat exchanger while preventing from passing through the total heat exchanger 344.

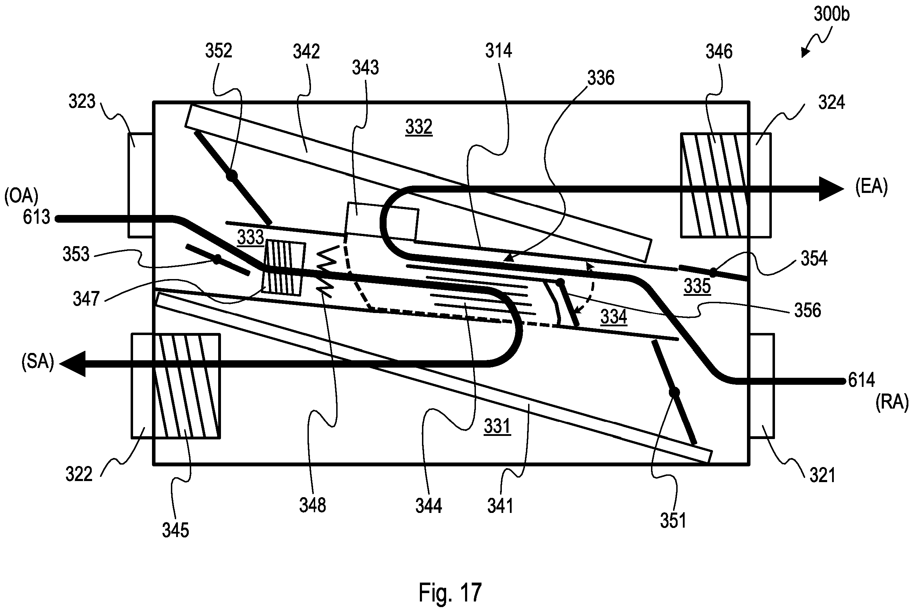

Fig. 17 is a schematic diagram indicating a schematic configuration of a second variation of the air-conditioner 300. The air-conditioner 300b as the second variation of the air-conditioner 300 may have substantially the same features as the air-conditioner 300 except for the features explained below.

The air-conditioner 300b has a semi-bypass channel 336. The semi-bypass channel 336 is formed substantially in parallel with the second air paths of the total heat exchanger 344. The semi-bypass channel 336 may be formed by the EA separator 314 and the outer surface of the total heat exchanger 344 therebetween. The semi-bypass channel 336 is configured to allow air to flow therein from the return-air inlet 321 towards the exhaust-air outlet 324 without passing through the total heat exchanger 344.

It is preferable that an end of the semi-bypass channel 336 is positioned between the point where the exhaust bypass channel 335 diverges from the exhaust ventilation channel 334 and the second air paths of the total heat exchanger 344. It is also preferable that another end of the semi-bypass channel 336 is positioned between the second air paths of the total heat exchanger 344 and the second sub heat exchanger 343. Thereby, the semi-bypass channel 336 allows the ventilation exhaust air 614 to pass through the second sub heat exchanger 343 and the second main heat exchanger 342 without passing through the total heat exchanger.

The air-conditioner 300b has a first switching damper (an exhaust damper) 356 which is a motor damper and controlled by the unit controller 381. The first switching damper 356 is disposed at the point where the semi-bypass channel 336 diverges from the exhaust ventilation channel 334. The first switching damper 356 is a part of the airflow regulator 350 (see Fig. 6).

The first switching damper 356 is configured to rotate between a first angle and a second angle, as indicated by the dashed arrow in Fig. 17. The first angle is an angle at which the semi-bypass channel 336 is closed by the first switching damper 356 and the second air paths of the total heat exchanger 344 is open with respect to the return-air inlet 321. The second angle is an angle at which the semi-bypass channel 336 is open and the second air paths of the total heat exchanger 344 is closed by the first switching damper 356 with respect to the return-air inlet 321. Thus, the first switching damper 356 is configured to switch the air path through which the ventilation exhaust air 614 primarily flows between the second air paths of the total heat exchanger 344 and the semi-bypass channel 336.

For instance, during a cooling operation, the unit controller 381 is configured to acquire the temperature of the refrigerant flowing in the second main heat exchanger 342, and determine whether the acquired temperature is higher than or equal to a predetermined threshold value. The unit controller 381 controls the first switching damper 356 to close the second air paths of the total heat exchanger 344 if the acquired temperature is higher than or equal to the predetermined threshold value. Thereby, the ventilation exhaust air 614 goes through the semi-bypass channel 336 and the second main heat exchanger 342. Meanwhile, the unit controller 381 controls the first switching damper 356 to close the semi-bypass channel 336 if the acquired temperature is lower than the predetermined threshold value. Thereby, the ventilation exhaust air 614 goes through the total heat exchanger 344 and the second main heat exchanger 342. Hence, it is possible to effectively decrease the temperature of the refrigerant flowing in the second sub heat exchanger 343 and the second main heat exchanger 342 as necessary.

The unit controller 381 may also be configured to control the first switching damper 356 to close the second air paths of the total heat exchanger 344 when it has been detected that the total heat exchanger 344 is malfunctioning or predicted to malfunction due to freezing, clogging or the like.

Alternatively, the air-conditioner 300 may be configured to allow the ventilation exhaust air 614 to pass through the total heat exchanger 344 while preventing from passing through the second heat exchanger.

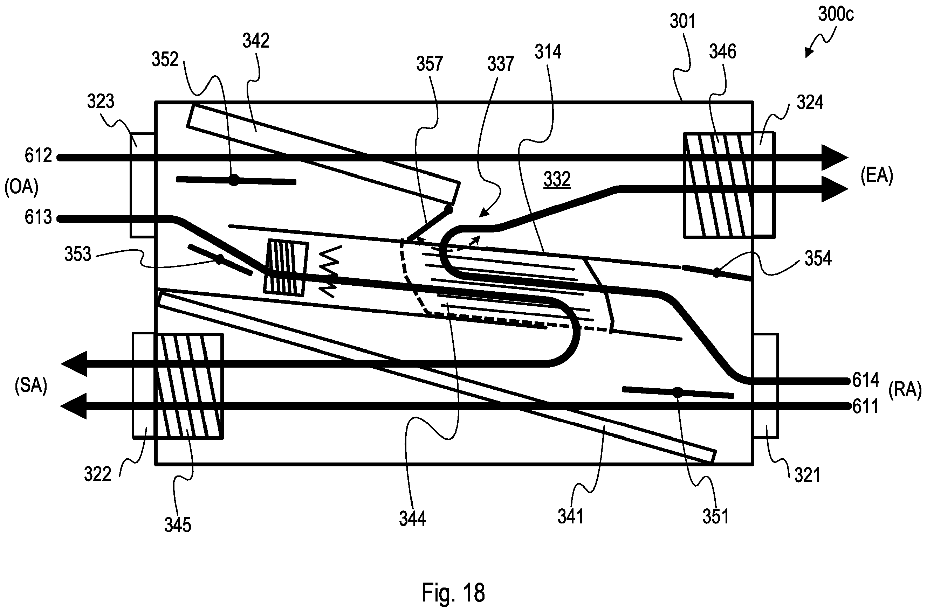

Fig. 18 is a schematic diagram indicating a schematic configuration of a second variation of the air-conditioner 300. The air-conditioner 300c as the third variation of the air-conditioner 300 may have substantially the same features as the air-conditioner 300 except for the features explained below.

The air-conditioner 300c has a semi-bypass aperture 337. With this configuration, the second sub heat exchanger 343 may be omitted. The semi-bypass aperture 337 is formed between the second main heat exchanger 342 and the EA separator 314. Thus, the cross-section of the second main air channel 332 along the second main heat exchanger 342 is divided into at least a region which is filled by the second main heat exchanger 342 and another region (i.e. the semi-bypass aperture 337) which is not filled by the second heat exchanger. The semi-bypass aperture 337 is configured to allow air to flow therein from the second air paths of the total heat exchanger 344 towards the exhaust-air outlet 324 without passing through the second main heat exchanger 342.

The air-conditioner 300c has a second switching damper (an exhaust damper) 357 which is a motor damper and controlled by the unit controller 381. The second switching damper 357 is disposed between the second main heat exchanger 342 and the semi-bypass aperture 337. The second switching damper 357 is a part of the airflow regulator 350 (see Fig. 6).

The second switching damper 357 is configured to rotate between a first angle and a second angle, as indicated by the dashed arrow in Fig. 18. The first angle is an angle at which the semi-bypass aperture 337 is closed by the second switching damper 357 and the second main heat exchanger 342 is open with respect to the second air paths of the total heat exchanger 344. The second angle is an angle at which the semi-bypass aperture 337 is open and the second main heat exchanger 342 is closed by the second switching damper 357 with respect to the second air paths of the total heat exchanger 344. Thus, the second switching damper 357 is configured to switch the air path through which the ventilation exhaust air 614 primarily flows between the second main heat exchanger 342 and the semi-bypass aperture 337. In other words, the second switching damper 357 is configured to switch whether the ventilation exhaust air 614 that has been passed through the total heat exchanger 344 goes through the second main heat exchanger 342.

For instance, during a cooling operation, the unit controller 381 is configured to acquire the temperature of the outside air, and determine whether the temperature of the outside air is higher than or equal to a predetermined threshold value. The unit controller 381 controls the second switching damper 357 to close the semi-bypass aperture 337 if the temperature of the outside air is higher than or equal to the predetermined threshold value. Thereby, the ventilation exhaust air 614 goes through the second main heat exchanger 342. Meanwhile, the unit controller 381 controls the second switching damper 357 to open the semi-bypass aperture 337 if the temperature of the outside air is lower than the predetermined threshold value. Thereby, the ventilation exhaust air 614 is prevented from going through the second main heat exchanger 342.

As another variation of the air-conditioner 300, the positional relationship of the return-air inlet 321, the supply-air outlet 322, the outside-air inlet 323 and the exhaust-air outlet 324 (i.e. the arrangement of the first main air channel 331, the second main air channel 332, the supply ventilation channel 333, the exhaust ventilation channel 334 and the exhaust bypass channel 335) may be modified from the positional relationship explained above.

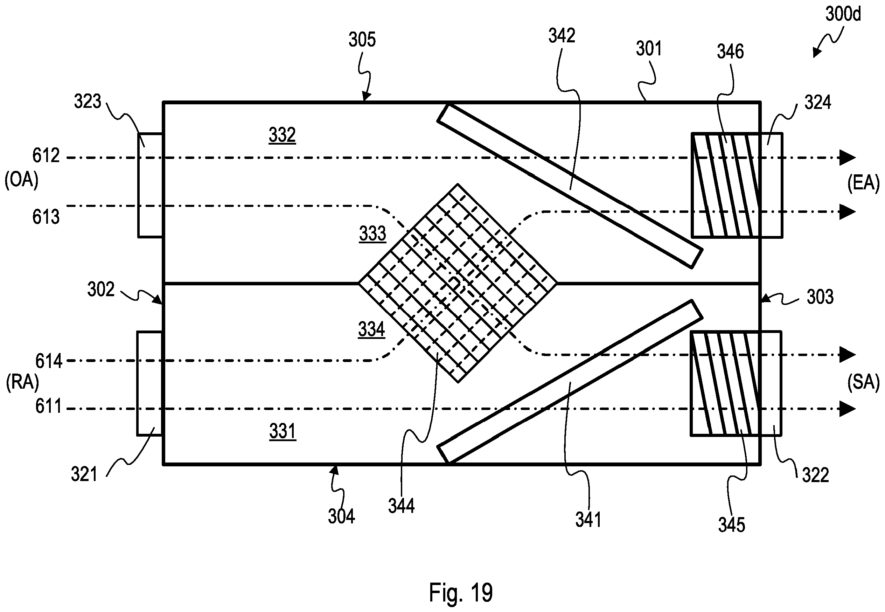

Fig. 19 is a schematic diagram indicating a schematic configuration of a fourth variation of the air-conditioner 300. The air-conditioner 300d as the fourth variation of the air-conditioner 300 may have substantially the same features as the air-conditioner 300 except for the features explained below.

In the air-conditioner 300d, the return-air inlet 321 and the outside-air inlet 323 are arranged on the same first face 302 of the housing 301, and the supply-air outlet 322 and the exhaust-air outlet 324 are arranged on the same second face 303. In other words, the first main air channel 331 and the second main air channel 332 are arranged substantially in parallel while being configured such that a direction from the return-air inlet 321 to the supply-air outlet 322 and a direction from the outside-air inlet 323 to the exhaust-air outlet 324 are substantially the same.

In such a configuration, it is preferable that, as shown in Fig. 19, the first heat exchanger 341 and the second main heat exchanger 342 are arranged such that an air-passing direction of the first heat exchanger 341 and an air-passing direction of the second main heat exchanger 342 are inclined with respect to each other. It is also preferable that the first heat exchanger 341 and the second main heat exchanger 342 are arranged so as to sandwich the total heat exchanger 344 therebetween.

As further another variation of the air-conditioner 300, the supply ventilation channel 333 and the exhaust ventilation channel 334 may be arranged substantially in parallel and configured such that a direction from the outside-air inlet 323 to the supply-air outlet 322 and a direction from the return-air inlet 321 to the exhaust-air outlet 324 are substantially opposite.

It is also possible to make the direction from the outside-air inlet 323 to the supply-air outlet 322 and the direction from the return-air inlet 321 to the exhaust-air outlet 324 substantially the same.

The positional relationship of the second main heat exchanger 342 and the exhaust ventilation channel 334 is not limited to the positional relationship explained above. For instance, the second main heat exchanger 342 may be arranged so as to allow the second passing air 612 to pass therethrough and arranged so as to prevent the ventilation exhaust air 614 from passing therethrough.

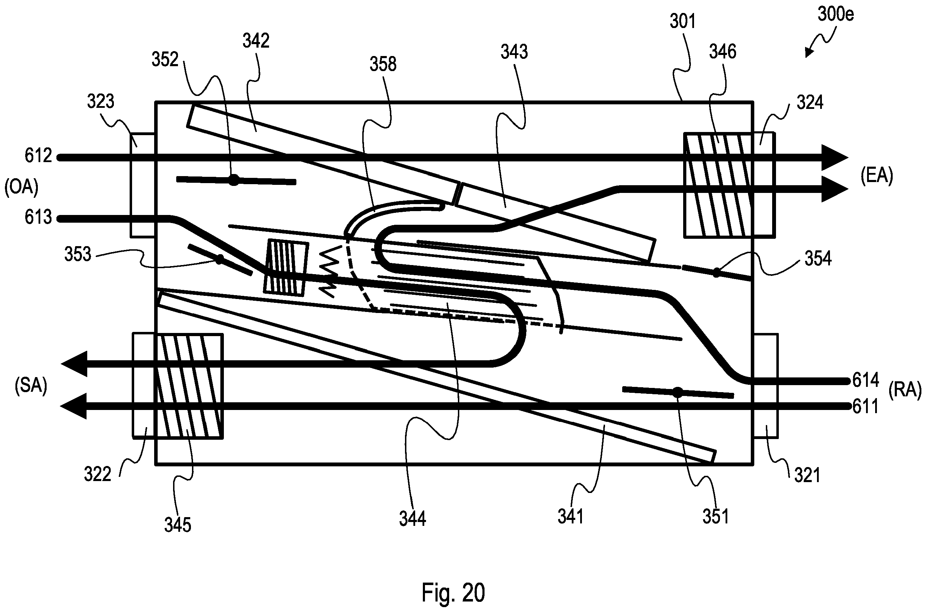

Fig. 20 is a schematic diagram indicating a schematic configuration of a fifth variation of the air-conditioner 300. The air-conditioner 300e as the fifth variation of the air-conditioner 300 may have substantially the same features as the air-conditioner 300 except for the features explained below.

In the air-conditioner 300e, the second main heat exchanger 342 and the second sub heat exchanger 343 form a plate-like shape. The exhaust ventilation channel 334 has a separation plate 358. The separation plate 358 separates a space where air is drawn to the second main heat exchanger 342 and the second sub heat exchanger 343 into a main space and a sub space. The main space is a space where air is drawn to the second main heat exchanger 342. The sub space is a space where air is drawn to the second sub heat exchanger 343.

In this configuration, the separation plate 358 separates the second main air channel 332 and the exhaust ventilation channel 334 on an upstream side of the second main heat exchanger 342 and the second sub heat exchanger 343 so as to prevent the ventilation exhaust air 614 from passing through the second main heat exchanger 342.

### Variations in Unit Arrangement

As further another variation of the air-conditioner 300, a part of the air-conditioner 300 may be separated from the rest part of the air-conditioner 300. For instance, an indoor unit including the first main air channel 331 and the first heat exchanger 341 and an outdoor unit including the second main air channel 332 and the second main heat exchanger 342 can be arranged separately.

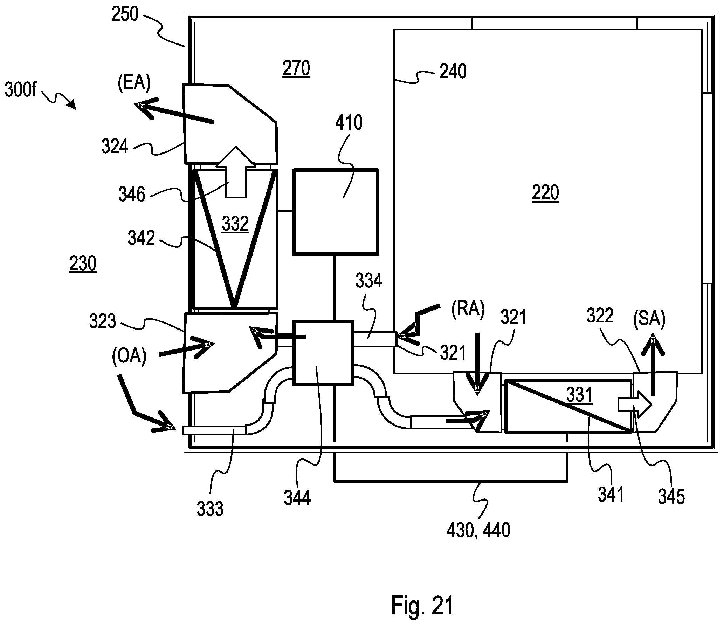

Fig. 21 is a schematic diagram indicating a schematic configuration of a sixth variation of the air-conditioner 300. The air-conditioner 300f as the sixth variation of the air-conditioner 300 may have substantially the same features as the air-conditioner 300 except for the features explained below.

In the air-conditioner 300f, the first main air channel 331, the second main air channel 332, and the total heat exchanger 344 are separated from each other. These channels are connected by a plurality of ducts. Thus, a part of the supply ventilation channel 333 and a part of the exhaust ventilation channel are formed by the ducts. The compressor unit 410 may be arranged in the rear wall space 270 as shown in Fig. 21.

As further another option, for instance, the unit controller 381 may be disposed in the compressor unit 410 and integrated with the system controller 412 (see Fig. 6). In this case, this integrated controller is configured to communicate with the first fan 345, the second fan 346, the third fan 347, the airflow regulator 350, the refrigerant regulator 374 and/or the release valve 420 to control them by a wired communication and/or a wireless communication.

In any case, it is preferable that the controller is configured to control the state of at least one of the air-conditioners 300 between the cooling mode connection state and the heating mode connection state, allowing the at least one of the air-conditioners 300 to be in one of the cooling mode connection state and the heating mode connection state, while another one of the air-conditioners 300 is in another one of the cooling mode connection state and the heating mode connection state.

### Variations in System Arrangement

As further another variation of the air-conditioner 300, the refrigerant circuit may be separated between the air-conditioners 300 and/or between the first heat exchanger 341 and the second main heat exchanger 342. For instance, a four-pipe system can be employed instead of the two-pipe system as shown in Fig. 5.

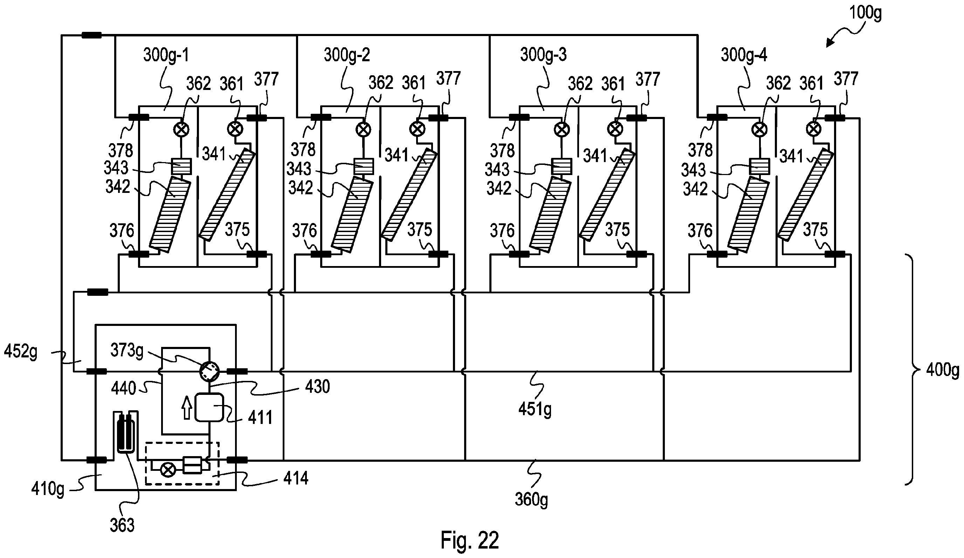

Fig. 22 is a schematic diagram indicating a schematic configuration of a variation of the air-conditioning system 100. The air-conditioning system 100g as the variation of the air-conditioning system 100 may have substantially the same features as the air-conditioning system 100 except for the features explained below.

In the air-conditioning system 100g, each air-conditioner 300g does not have the liquid refrigerant pipe 360 directly connecting the first heat exchanger 341 and the second heat exchanger 342, 343 and the four-way valve 373 (see Figs. 4 and 5). Instead, the air-conditioning system 100g has a liquid refrigerant pipe 360g in the outside of the air-conditioners 300g, and a four-way valve 373g as a switching mechanism in the compressor unit 410g. In other words, the liquid refrigerant pipe 360g and the four-way valve 373g is disposed in the refrigerant compressor system 400e. Since the four-way valve 373 is not mounted on the air-conditioners 300g, it is possible to free the air-conditioners 300g from the noise caused by the four-way valve 373.

Moreover, each air-conditioner 300g has a first gas refrigerant port 375, a second gas refrigerant port 376, a first liquid refrigerant port 377 and a second liquid refrigerant port 378, instead of the high-pressure gas refrigerant port 371 and the low-pressure gas refrigerant port 372 (see Figs. 4 and 5).

The first gas refrigerant port 375 and the first liquid refrigerant port 377 are connected to the first heat exchanger 341 on the opposite sides thereof. The second gas refrigerant port 376 and the second liquid refrigerant port 378 are connected to the second heat exchanger 342, 343 on the opposite sides thereof.

One end of the liquid refrigerant pipe 360g is branched towards and connected to the first heat exchangers 341 of the air-conditioners 300g. More specifically, the one end of the liquid refrigerant pipe 360g is connected to each of the first liquid refrigerant ports 377 of the air-conditioners 300g. Another side of the liquid refrigerant pipe 360g is branched towards and connected to the second heat exchangers 342 of the air-conditioners 300g. More specifically, the other end of the liquid refrigerant pipe 360g is connected to each of the second liquid refrigerant ports 378 of the air-conditioners 300g. Thus, the first heat exchangers 341 of the air-conditioners 300g, the liquid refrigerant pipe 360g, and the second heat exchangers 342 of the same air-conditioners 300g is connected in series in this order.

In the liquid refrigerant pipe 360g, at least one expansion valve is disposed. Preferably, the first expansion valve 361 is disposed between the first liquid refrigerant port 377 and the first heat exchanger 341 of each air-conditioner 300g, and the second expansion valve 362 is disposed between the second liquid refrigerant port 378 and the second heat exchanger 342, 343 of each air-conditioner 300g. However, it is also possible to dispose, instead of the first expansion valves 361 and the second expansion valves 362, only one expansion valve in a part through which the refrigerant circulating each of all the air-conditioners 300g passes.

The air-conditioning system 100g further has a first gas refrigerant pipe 451g and a second gas refrigerant pipe 452g. The first gas refrigerant pipe 451g is branched towards and connected to the first heat exchangers 341 of the air-conditioners 300g. More specifically, the first gas refrigerant pipe 451g is connected to each of the first gas refrigerant ports 375 of the air-conditioners 300g. The second gas refrigerant pipe 452g is branched towards and connected to the second heat exchangers 342, 343 of the air-conditioners 300g. More specifically, the second gas refrigerant pipe 452g is connected to each of the second gas refrigerant ports 376 of the air-conditioners 300g. It is preferable that the release valve 420 is provided to the liquid refrigerant pipe 360g (not shown in Fig. 22).

The high-pressure gas refrigerant pipe 430 and the low-pressure gas refrigerant pipe 440 are arranged in the compressor unit 410g. The four-way valve 373g is connected to each of the high-pressure gas refrigerant pipe 430, the low-pressure gas refrigerant pipe 440, the first gas refrigerant pipe 451g and the second gas refrigerant pipe 452g. The four-way valve 373g is configured to switch the states of the air-conditioners 300 between the cooling mode connection state and the heating mode connection state. The operation of the four-way valve 373g is controlled by the system controller 412 (see Fig. 6).

At least a part of the liquid refrigerant pipe 360g may be arranged in the compressor unit, 410g. In this case, it is preferable that the receiver 363 is disposed in this part. In addition, it is preferable that the compressor unit 410g further has a sub-cooling heat exchanger 414.

The sub-cooling heat exchanger 414 is fluidly connected to the liquid refrigerant pipe liquid refrigerant pipe. The sub-cooling heat exchanger 414 configured to cool down the refrigerant flowing in the liquid refrigerant pipe. More specifically, the sub-cooling heat exchanger 414 has a bypass pipe diverges from the liquid refrigerant pipe 360g and merges with the low-pressure gas refrigerant pipe 440. The bypass pipe has an expansion valve and a refrigerant heat exchanger in this order along the flow direction of the refrigerant from the liquid refrigerant pipe 360g to the low-pressure gas refrigerant pipe 440. The refrigerant heat exchanger causes a heat exchange between the refrigerant flowing in the liquid refrigerant pipe 360g and the refrigerant flowing in the bypass pipe after the expansion valve.

The temperature of the refrigerant decreases when passing through this expansion valve. Hence, the refrigerant flowing in the liquid refrigerant pipe 360g is cooled down at the refrigerant heat exchanger. Moreover, a part of the refrigerant flowing in the liquid refrigerant pipe 360g diverges towards the suction side of the refrigerant compressor 411, and thus does not flow into the air-conditioners 300g. Thus, this configuration makes it possible to improve the heat exchange efficiency in the first heat exchanger 341 or the second heat exchanger 342, 343 functioning as an evaporator, and/or reduce the mass flow of the refrigerant in the evaporator while maintaining the heat exchange efficiency in the evaporator.

In any configuration of the air-conditioning system 100 explained above, the compressor unit 410 may have a plurality of the refrigerant compressors 411. In this case, each of the high-pressure gas refrigerant pipe 430 and the low-pressure gas refrigerant pipe 440 may be branched towards and connected to the refrigerant compressors 411. In this case, the plurality of refrigerant compressors 411 are shared by the plurality of air-conditioners 300.

The components of the compressor unit 410, the high-pressure gas refrigerant pipe 430, and the low-pressure gas refrigerant pipe 440 may be integrated with one or more of the air-conditioners 300 within the housing 301 or another housing.

### Other Variations

Needless to say, the application of the air-conditioner 300 is not limited to the application explained above. For instance, the air-conditioner 300 can be installed in a compound including a plurality of spaces to be air-conditioned and/or ventilated.

The refrigerant used in the air-conditioning systems above is not limited to the carbon dioxide refrigerant. For instance, R410A, R134a, R32 or any other refrigerant may be used in the air-conditioning system 100.

The number and/or arrangement of each of the air-conditioner 300, the compressor unit 410 and other components of the air-conditioning system 100 is not limited to the number and/or arrangement explained above. For instance, a plurality of the air-conditioners 300 may be arranged for the same space. The air-conditioner 300 may disposed in the ceiling, in the space to be air-conditioned and/or ventilated, or in the outside in an exposed state.

Of course, the number and/or arrangement of each components of the air-conditioner 300 is not limited to the number and/or arrangement explained above. For instance, the first heat exchanger 341 and the second main heat exchanger 342 may be arranged such that the air-passing directions thereof substantially correspond with the extending directions of the first main air channel 331 and the second main air channel 332, respectively.

Obviously, one or more of the components and the air channels of the air-conditioner 300 may be omitted or replaced with other components that have substantially identical functions. For instance, the total heat exchanger 344, the second sub heat exchanger 343, the third fan 347, the electrical pre-heater 348, and/or the inner aperture 315 (and the exhaust bypass damper 354) may be omitted. In a case where one or more of power sources, such as air fans, that induce the necessary airflows in the air-conditioner 300 are provided outside the air-conditioner 300, the first fan 345, the second fan 346, and/or the third fan 347 may be omitted. The four-way valve 373 may be replaced with a mechanism having a first pair of pipes branched from a first pipe, a second pair of pipes branched from a second pipe, and four valves disposed in the branched four pipes, respectively.

Components not particularly specified in the above descriptions may be added. For instance, as an exhaust damper disposed in the exhaust ventilation channel 334, an exhaust main damper which is a motor damper and different from the exhaust bypass damper 354 may be arranged. The exhaust main damper may be arranged between the return-air inlet 321 and the total heat exchanger 344, and configured to regulate a flow of at least a part of the ventilation exhaust air 614 that passes through the total heat exchanger 344.

The operation performed by the air-conditioner 300 is not limited to the operation explained above. For instance, the air-conditioner 300 may be configured to perform only a part of the above explained operation states. The conditions for switching the operation state is also not limited to the conditions explained above.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Thus, the foregoing descriptions of the embodiments according to the present invention are provided for illustration only.

### Reference list

- 100, 100g:: Air-Conditioning System
- 200:: Building
- 210:: Machine Space
- 220:: Predetermined Space
- 230:: Outside
- 240:: Inner Wall
- 241:: RA Suction Grill
- 242:: SA Discharge Grill
- 243:: Inspection Door
- 250:: Outer Wall
- 251:: OA Suction Grill
- 252:: EA Discharge Grill
- 261:: Ceiling Slab
- 262:: Floor Slab
- 270:: Rear Wall Space
- 300, 300a, 300b, 300c, 300d, 300e, 300f, 300g:: Air-Conditioner
- 301:: Housing
- 302:: First Face
- 303:: Second Face
- 304:: Third Face
- 305:: Fourth Face
- 311:: RA Separator
- 312:: SA Separator
- 313:: OA Separator
- 314:: EA Separator
- 315:: Inner Aperture
- 316:: First Separator Unit
- 317:: Second Separator Unit
- 321:: Return-Air Inlet
- 322:: Supply-Air Outlet
- 323:: Outside-Air Inlet
- 324:: Exhaust-Air Outlet
- 331:: First Main Air Channel
- 332:: Second Main Air Channel
- 333:: Supply Ventilation Channel
- 334:: Exhaust Ventilation Channel
- 335:: Exhaust Bypass Channel
- 336:: Semi-bypass Channel
- 337:: Semi-bypass Aperture
- 341:: First Heat Exchanger
- 342:: Second Main Heat Exchanger (Second Heat Exchanger)
- 343:: Second Sub Heat Exchanger (Second Heat Exchanger)
- 344:: Total Heat Exchanger
- 345:: First Fan
- 346:: Second Fan
- 347:: Third Fan
- 348:: Electrical Pre-Heater
- 350:: Airflow Regulator
- 351:: First Main Damper
- 352:: Second Main Damper
- 353:: Second Sub Damper
- 354:: Exhaust Bypass Damper (Exhaust Damper)
- 355:: Exhaust Switching Damper (Exhaust Damper)
- 356:: First Switching Damper (Exhaust Damper)
- 357:: Second Switching Damper (Exhaust Damper)
- 358:: Separation Plate
- 360, 360g:: Liquid Refrigerant Pipe
- 361:: First Expansion Valve
- 362:: Second Expansion Valve
- 363:: Receiver
- 370:: Pipe Connecting Mechanism
- 371:: High-Pressure Gas Refrigerant Port
- 372:: Low-Pressure Gas Refrigerant Port
- 373, 373g:: Four-Way Valve (Switching Mechanism)
- 374:: Refrigerant Regulator
- 375:: First Gas Refrigerant Port
- 376:: Second Gas Refrigerant Port
- 377:: First Liquid Refrigerant Port
- 378:: Second Liquid Refrigerant Port
- 381:: Unit Controller (Controller)
- 400, 400g:: Refrigerant Compressor System
- 410, 410g:: Compressor Unit
- 411:: Refrigerant Compressor
- 412:: System Controller (Controller)
- 413:: System Storage
- 414:: Sub-Cooling Heat Exchanger
- 420:: Release Valve
- 430:: High-Pressure Gas Refrigerant Pipe
- 440:: Low-Pressure Gas Refrigerant Pipe
- 451g:: First Gas Refrigerant Pipe
- 452g:: Second Gas Refrigerant Pipe
- 510:: Room CO2 Sensor
- 511:: Machine Space CO2 Sensor
- 611:: First Passing Air
- 612:: Second Passing Air
- 613:: Ventilation Intake Air
- 614:: Ventilation Exhaust Air
- 615:: Exhaust Bypass Air

## Claims

1. An air-conditioner (300), comprising:
a return-air inlet (321) and a supply-air outlet (322) each communicating with a predetermined space (220);
a first main air channel (331) configured to allow air to flow therein from the return-air inlet towards the supply-air outlet;
a first heat exchanger (341) disposed in the first main air channel to cause a heat-exchange between refrigerant flowing therein and air passing therethrough;
an outside-air inlet (323) and an exhaust-air outlet (324) each communicating with an outside of the predetermined space;
a second main air channel (332) configured to allow air to flow therein from the outside-air inlet towards the exhaust-air outlet;
a second heat exchanger (342) disposed in the second main air channel to cause a heat-exchange between refrigerant flowing therein and air passing therethrough; and
an exhaust ventilation channel (334) configured to allow air to flow therein from the return-air inlet towards the exhaust-air outlet,
wherein:
the exhaust ventilation channel is configured to allow ventilation exhaust air (614) to pass through the second heat exchanger,
the ventilation exhaust air being air that has been taken in through the return-air inlet and to be discharged through the exhaust-air outlet: and
the air-conditioner further comprises
an airflow regulator (350) configured to regulate a flow of each of at least first passing air (611), second passing air (612) and the ventilation exhaust air,
the first passing air being air that has been taken in through the return-air inlet and to be discharged through the supply-air outlet,
the second passing air being air that has been taken in through the outside-air inlet and to be discharged through the exhaust-air outlet,
**characterized in that**:
each of the first and second heat exchangers is configured to flow carbon dioxide refrigerant therein; and
the airflow regulator is configured to regulate the flows of the second passing air and the ventilation exhaust air such that the temperature of an air which goes through the second heat exchanger is under the supercritical temperature of the carbon dioxide refrigerant flowing in the second heat exchanger.

2. The air-conditioner (300) according to claim 1, wherein
the exhaust ventilation channel (334) is configured to allow second passing air (612) to be mixed with the ventilation exhaust air (614) before the second passing air passes through the second heat exchanger (342).

3. The air-conditioner (300) according to claim 1 or 2, further comprising:
a supply ventilation channel (333) configured to allow air to flow therein from the outside-air inlet (323) towards the supply-air outlet (322).

4. The air-conditioner (300) according to claim 3, wherein
the supply ventilation channel (333) is configured to allow first passing air (611) to be mixed with ventilation intake air (613) before the first passing air passes through the first heat exchanger (341),
the ventilation intake air being air that has been taken in through the outside-air inlet (323) and to be discharged through the supply-air outlet.

5. The air-conditioner (300) according to claim 3 or 4, further comprising
a total heat exchanger (344) forming at least a part of the supply ventilation channel (333) and at least a part of the exhaust ventilation channel (334) to cause a heat-exchange between the ventilation intake air (613) and the ventilation exhaust air (614).

6. The air-conditioner (300) according to any one of claims 1 to 5, wherein
the airflow regulator (350) includes:
a first main damper (351) disposed in the first main air channel (331);
a second main damper (352) disposed in the second main air channel (332); and
an exhaust damper (354) disposed in the exhaust ventilation channel (334).

7. The air-conditioner (300) according to any one of claims 1 to 6, wherein:
the first heat exchanger (341) is arranged such that an air-passing direction of the first heat exchanger is inclined with respect to an extending direction of the first main air channel (331); and
the second heat exchanger (342) is arranged such that an air-passing direction of the second heat exchanger is inclined with respect to an extending direction of the second main air channel (332).

8. The air-conditioner (300) according to any one of claims 1 to 7, wherein
the first main air channel (331) and the second main air channel (332) are arranged substantially in parallel and configured such that a direction from the return-air inlet (321) to the supply-air outlet (322) and a direction from the outside-air inlet (323) to the exhaust-air outlet (324) are substantially opposite.

9. The air-conditioner (300d) according to claim claims 1 to 7, wherein
the first main air channel (331) and the second main air channel (332) are arranged substantially in parallel and configured such that a direction from the return-air inlet (321) to the supply-air outlet (322) and a direction from the outside-air inlet (323) to the exhaust-air outlet (324) are substantially the same.

10. The air-conditioner (300) according to any one of claims 3 to 7 with the supply ventilation channel (333), wherein
the supply ventilation channel and the exhaust ventilation channel (334) are arranged substantially in parallel and configured such that a direction from the outside-air inlet (323) to the supply-air outlet (322) and a direction from the return-air inlet (321) to the exhaust-air outlet (324) are substantially opposite.

11. The air-conditioner (300) according to any one of claims 3 to 7 with supply ventilation channel (333), wherein
the supply ventilation channel and the exhaust ventilation channel (334) are arranged substantially in parallel and configured such that a direction from the outside-air inlet (323) to the supply-air outlet (322) and a direction from the return-air inlet (321) to the exhaust-air outlet (324) are substantially the same.

12. The air-conditioner (300) according to any one of claims 1 to 11, further comprising:
a pipe connecting mechanism (370) configured to connect each of the first heat exchanger (341) and the second heat exchanger (342) to a refrigerant compressor (411), via a high-pressure gas refrigerant pipe (430) connected to a discharge side of the refrigerant compressor and a low-pressure gas refrigerant pipe (440) connected to a suction side of the refrigerant compressor, such that the first heat exchanger, the second heat exchanger and the refrigerant compressor form a heat pump circuit.

13. The air-conditioner (300a) according to any one of claims 1 to 12, wherein:
the airflow regulator (350) is configured to switch whether the ventilation exhaust air (614) goes through the second heat exchanger (342).

14. The air-conditioner (300a) according to claim 13, further comprising:
a controller (381) configured to determine whether a predetermined condition is met that the temperature of an air drawn into the air-conditioner from the outside-air inlet (323) is higher than or equal to a predetermined threshold value,
wherein
the airflow regulator (350) is configured to regulate the flows of the second passing air (612) and the ventilation exhaust air (614) such that the ventilation exhaust air goes through the second heat exchanger (342) if the predetermined condition is met, and that the ventilation exhaust air is prevented from going through the second heat exchanger if the predetermined condition is not met.

15. The air-conditioner (300c) according to any one of claims 5 to 14 with the total heat exchanger (344), wherein:
the airflow regulator (350) is configured to switch whether the ventilation exhaust air (614) that has been passed through the total heat exchanger goes through the second heat exchanger (342).

16. The air-conditioner (300) according to any one of claims 1 to 15, wherein
the second heat exchanger (342) includes:
a second main heat exchanger (342) configured to cause a heat-exchange between refrigerant flowing therein and air passing therethrough; and
a second sub heat exchanger (343) disposed in the exhaust ventilation channel (334) to cause a heat-exchange between refrigerant flowing therein and air passing there through.

17. The air-conditioner (300) according to claim 16, wherein
the second sub heat exchanger (343) is configured to flow refrigerant therein that has flown through the second main heat exchanger (342) when the second heat exchanger (342, 323) functions as a condenser.

18. The air-conditioner (300) according to claim 16 or 17, wherein
the second sub heat exchanger (343) is arranged so as to allow the ventilation exhaust air (614) to pass therethrough and so as to prevent the second passing air (612) from passing therethrough.

19. The air-conditioner (300) according to any one of claims 16 to 18, wherein
the second sub heat exchanger (343) and the second main heat exchanger (342) are arranged in series in this order along a direction of airflow of the ventilation exhaust air (614).

20. The air-conditioner (300) according to claim 19 with the total heat exchanger (344), wherein
the total heat exchanger, the second sub heat exchanger (343) and the second main heat exchanger (342) are arranged in series in this order along a direction of airflow of the ventilation exhaust air (614).

21. The air-conditioner (300) according to any one of claims 16 to 18, wherein:
the second main heat exchanger (342) is arranged so as to allow the second passing air (612) to pass therethrough and so as to prevent the ventilation exhaust air (614) from passing therethrough.

22. The air-conditioner (300a) according to claim 21, wherein:
the second main heat exchanger (342) and the second sub heat exchanger (343) form a plate-like shape; and
the exhaust ventilation channel (334) has a separation plate (358) separating a space where air is drawn to the second main heat exchanger and the second sub heat exchanger into a main space where air is drawn to the second main heat exchanger and a sub space where air is drawn to the second sub heat exchanger.

23. The air-conditioner (300) according to any one of claims 16 to 22, wherein
the second sub heat exchanger (343) is arranged so as to come into contact with at least a part of the second passing air (612).

24. The air-conditioner (300) according to any one of claims 16 to 23 with the total heat exchanger (344),
wherein
the second sub heat exchanger (343) is disposed on a downstream side of the total heat exchanger in the direction from the return-air inlet (321) to the exhaust-air outlet (324).

25. The air-conditioner (300) according to any one of claims 16 to 24 with the total heat exchanger (344), further comprising:
an electrical pre-heater (348) disposed in the supply ventilation channel (333) between the outside-air inlet (323) and the total heat exchanger.

26. The air-conditioner (300) according to any one of claims 1 to 25, further comprising:
a housing (301) accommodating at least the first main air channel (331), the second main air channel (332), and the exhaust ventilation channel (334);
a first fan (345) configured to draw air in the housing towards the supply-air outlet (322); and
a second fan (346) configured to draw air in the housing towards the exhaust-air outlet (324).

## Patentansprüche

1. Klimaanlage (300) mit:
einem Rücklufteinlass (321) und einem Zuluftauslass (322), die jeweils mit einem vorgegebenen Raum (220) in Verbindung stehen;
einem ersten Hauptluftkanal (331), der konfiguriert ist, darin Luft vom Rücklufteinlass zum Zuluftauslass strömen zu lassen;
einem ersten Wärmetauscher (341), der im ersten Hauptluftkanal angeordnet ist, um einen Wärmetausch zwischen einem darin fließenden Kältemittel und dort hindurch strömender Luft zu bewirken;
einem Außenlufteinlass (323) und einem Abluftauslass (324) die jeweils mit einem Äußeren des vorgegebenen Raums in Verbindung stehen;
einem zweiten Hauptluftkanal (332), der konfiguriert ist, darin Luft vom Außenlufteinlass zum Abluftauslass strömen zu lassen;
einem zweiten Wärmetauscher (342), der im zweiten Hauptluftkanal angeordnet ist, um einen Wärmetausch zwischen einem darin fließenden Kältemittel und dort hindurch strömender Luft zu bewirken; und
einem Abluftventilationskanal (334), der konfiguriert ist, darin Luft vom Rücklufteinlass zum Abluftauslass strömen zu lassen,
wobei:
der Abluftventilationskanal konfiguriert ist, Ventilationsabluft (614) durch den zweiten Wärmetauscher strömen zu lassen,
wobei die Ventilationsabluft Luft ist, die durch den Rücklufteinlass aufgenommen worden ist und durch den Abluftauslass abgelassen werden soll; und
die Klimaanlage ferner aufweist:
einen Luftstromregler (350), der konfiguriert ist, einen Strom von jeweils mindestens erster durchströmender Luft (611), zweiter durchströmender Luft (612) und der Ventilationsabluft zu regeln,
wobei die erste durchströmende Luft Luft ist, die durch den Rücklufteinlass aufgenommen worden ist und durch den Zuluftauslass abgelassen werden soll,
wobei die zweite durchströmende Luft Luft ist, die durch den Außenlufteinlass aufgenommen worden ist und durch den Abluftauslass abgelassen werden soll,
**dadurch gekennzeichnet, dass**:
jeweils der erste und zweite Wärmetauscher konfiguriert ist, darin Kohlendioxid-Kältemittel fließen zu lassen; und
der Luftstromregler konfiguriert ist, die Ströme der zweiten durchströmenden Luft und der Ventilationsabluft so zu regeln, dass die Temperatur von Luft, die durch den zweiten Wärmetauscher strömt, unter der überkritischen Temperatur des Kohlendioxid-Kältemittels liegt, das im zweiten Wärmetauscher fließt.

2. Klimaanlage (300) nach Anspruch 1, wobei der Abluftventilationskanal (334) konfiguriert ist, es zu ermöglichen, dass zweite durchströmende Luft (612) mit der Ventilationsabluft (614) gemischt wird, bevor die zweite durchströmende Luft durch den zweiten Wärmetauscher (342) strömt.

3. Klimaanlage (300) nach Anspruch 1 oder 2, die ferner aufweist:
einen Zuluftventilationskanal (333), der konfiguriert ist, darin Luft vom Außenlufteinlass (323) zum Zuluftauslass (322) strömen zu lassen.

4. Klimaanlage (300) nach Anspruch 3, wobei
der Zuluftventilationskanal (333) konfiguriert ist, es zu ermöglichen, dass erste durchströmende Luft (611) mit Ventilationsansaugluft (613) gemischt wird, bevor die erste durchströmende Luft durch den ersten Wärmetauscher (341) strömt,
wobei die Ventilationsansaugluft Luft ist, die durch den Außenlufteinlass (323) aufgenommen worden ist und durch den Zuluftauslass abgelassen werden soll.

5. Klimaanlage (300) nach Anspruch 3 oder 4, die ferner aufweist
einen Gesamtwärmetauscher (344), der mindestens einen Teil des Zuluftventilationskanals (333) und mindestens einen Teil des Abluftventilationskanals (334) bildet, um einen Wärmetausch zwischen der Ventilationsansaugluft (613) und der Ventilationsabluft (614) zu bewirken.

6. Klimaanlage (300) nach einem der Ansprüche 1 bis 5, wobei der Luftstromregler (350) aufweist:
einen ersten Hauptdämpfer (351), der im ersten Hauptluftkanal (331) angeordnet ist;
einen zweiten Hauptdämpfer (352), der im zweiten Hauptluftkanal (332) angeordnet ist; und
einen Abluftdämpfer (354), der im Abluftventilationskanal (334) angeordnet ist.

7. Klimaanlage (300) nach einem der Ansprüche 1 bis 6, wobei:
der erste Wärmetauscher (341) so angeordnet ist, dass eine Luftströmungsrichtung des ersten Wärmetauschers bezüglich einer Ausdehnungsrichtung des ersten Hauptluftkanals (331) geneigt ist; und
der zweite Wärmetauscher (342) so angeordnet ist, dass eine Luftströmungsrichtung des zweiten Wärmetauschers bezüglich einer Ausdehnungsrichtung des zweiten Hauptluftkanals (332) geneigt ist.

8. Klimaanlage (300) nach einem der Ansprüche 1 bis 7, wobei
der erste Hauptluftkanal (331) und der zweite Hauptluftkanal (332) im Wesentlichen parallel angeordnet und so konfiguriert sind, dass eine Richtung vom Rücklufteinlass (321) zum Zuluftauslass (322) und eine Richtung vom Außenlufteinlass (323) zum Abluftauslass (324) im Wesentlichen entgegengesetzt sind.

9. Klimaanlage (300d) nach einem der Ansprüche 1 bis 7, wobei
der erste Hauptluftkanal (331) und der zweite Hauptluftkanal (332) im Wesentlichen parallel angeordnet und so konfiguriert sind, dass eine Richtung vom Rücklufteinlass (321) zum Zuluftauslass (322) und eine Richtung vom Außenlufteinlass (323) zum Abluftauslass (324) im Wesentlichen dieselben sind.

10. Klimaanlage (300) nach einem der Ansprüche 3 bis 7 mit dem Zuluftventilationskanal (333), wobei
der Zuluftventilationskanal und der Abluftventilationskanal (334) im Wesentlichen parallel angeordnet und so konfiguriert sind, dass eine Richtung vom Außenlufteinlass (323) zum Zuluftauslass (322) und eine Richtung vom Rücklufteinlass (321) zum Abluftauslass (324) im Wesentlichen entgegengesetzt sind.

11. Klimaanlage (300) nach einem der Ansprüche 3 bis 7 mit dem Zuluftventilationskanal (333), wobei
der Zuluftventilationskanal und der Abluftventilationskanal (334) im Wesentlichen parallel angeordnet und so konfiguriert sind, dass eine Richtung vom Außenlufteinlass (323) zum Zuluftauslass (322) und eine Richtung vom Rücklufteinlass (321) zum Abluftauslass (324) im Wesentlichen dieselben sind.

12. Klimaanlage (300) nach einem der Ansprüche 1 bis 11, die ferner aufweist:
einen Leitungsverbindungs-Mechanismus (370), der konfiguriert ist, jeweils den ersten Wärmetauscher (341) und den zweiten Wärmetauscher (342) über eine Hochdruckgas-Kältemittelleitung (430), die mit einer Ausstoßseite des Kältemittelverdichters verbunden ist, und eine Niederdruckgas-Kältemittelleitung (440), die mit einer Ansaugseite des Kältemittelverdichters verbunden ist, mit einem Kältemittelverdichter (411) zu verbinden, so dass der erste Wärmetauscher, der zweite Wärmetauscher und der Kältemittelverdichter einen Wärmepumpenkreislauf bilden.

13. Klimaanlage (300a) nach einem der Ansprüche 1 bis 12, wobei:
der Luftstromregler (350) konfiguriert ist zu schalten, ob die Ventilationsabluft (614) durch den zweiten Wärmetauscher (342) strömt.

14. Klimaanlage (300a) nach Anspruch 13, die ferner aufweist:
eine Steuerung (381), die konfiguriert ist festzustellen, ob eine vorgegebenen Bedingung erfüllt ist, dass die Temperatur einer in die Klimaanlage vom Außenlufteinlass (323) eingesaugten Luft höher oder gleich einem vorgegebenen Schwellenwert ist,
wobei
der Luftstromregler (350) konfiguriert ist, die Ströme der zweiten durchströmenden Luft (612) und der Ventilationsabluft (614) so zu regeln, dass die Ventilationsabluft durch den zweiten Wärmetauscher (342) strömt, wenn die vorgegebene Bedingung erfüllt ist, und
dass verhindert wird, dass die Ventilationsabluft durch den zweiten Wärmetauscher strömt, wenn die vorgegebene Bedingung nicht erfüllt ist.

15. Klimaanlage (300c) nach einem der Ansprüche 5 bis 14 mit dem Gesamtwärmetauscher (344), wobei
der Luftstromregler (350) konfiguriert ist, zu schalten, ob die Ventilationsabluft (614), die durch den Gesamtwärmetauscher geströmt ist, durch den zweiten Wärmetauscher (342) strömt.

16. Klimaanlage (300) nach einem der Ansprüche 1 bis 15, wobei der zweite Wärmetauscher (342) aufweist:
einen zweiten Hauptwärmetauscher (342), der konfiguriert ist, einen Wärmetausch zwischen einem darin fließenden Kältemittel und dort hindurch strömender Luft zu bewirken; und
einen zweiten Unterwärmetauscher (343), der im Abluftventilationskanal (334) angeordnet ist, um einen Wärmetausch zwischen einem darin fließenden Kältemittel und dort hindurch strömender Luft zu bewirken.

17. Klimaanlage (300) nach Anspruch 16, wobei
der zweite Unterwärmetauscher (343) konfiguriert ist, darin Kältemittel fließen zu lassen, das durch den zweiten Hauptwärmetauscher (342) geflossen ist, wenn der zweite Wärmetauscher (342, 323) als ein Kondensator arbeitet.

18. Klimaanlage (300) nach Anspruch 16 oder 17, wobei
der zweite Unterwärmetauscher (343) so angeordnet ist, dass er die Ventilationsabluft (614) dort hindurch strömen lässt und verhindert, dass die zweite durchströmende Luft (612) dort hindurch strömt.

19. Klimaanlage (300) nach einem der Ansprüche 16 bis 18, wobei
der zweite Unterwärmetauscher (343) und der zweite Hauptwärmetauscher (342) hintereinander in dieser Reihenfolge längs einer Richtung des Luftstroms der Ventilationsabluft (614) angeordnet sind.

20. Klimaanlage (300) nach Anspruch 19 mit dem Gesamtwärmetauscher (344), wobei
der Gesamtwärmetauscher, der zweite Unterwärmetauscher (343) und der zweite Hauptwärmetauscher (342) hintereinander in dieser Reihenfolge längs einer Richtung des Luftstroms der Ventilationsabluft (614) angeordnet sind.

21. Klimaanlage (300) nach einem der Ansprüche 16 bis 18, wobei:
der zweite Hauptwärmetauscher (342) so angeordnet ist, dass er die zweite durchströmende Luft (612) dort hindurch strömen lässt und verhindert, dass die Ventilationsabluft (614) dort hindurch strömt.

22. Klimaanlage (300a) nach Anspruch 21, wobei:
der zweite Hauptwärmetauscher (342) und der zweite Unterwärmetauscher (343) eine plattenförmige Form bilden; und
der Abluftventilationskanal (334) eine Trennplatte (358) aufweist, die einen Raum, in dem Luft zum zweiten Hauptwärmetauscher und zum zweiten Unterwärmetauscher gesaugt wird, in einen Hauptraum, in dem Luft zum zweiten Hauptwärmetauscher gesaugt wird, und einen Unterraum trennt, in dem Luft zum zweiten Unterwärmetauscher gesaugt wird.

23. Klimaanlage (300) nach einem der Ansprüche 16 bis 22, wobei
der zweite Unterwärmetauscher (343) so angeordnet ist, dass er mit mindestens einen Teil der zweiten durchströmenden Luft (612) in Kontakt kommt.

24. Klimaanlage (300) nach einem der Ansprüche 16 bis 23 mit dem Gesamtwärmetauscher (344),
wobei
der zweite Unterwärmetauscher (343) in der Richtung vom Rücklufteinlass (321) zum Abluftauslass (324) auf einer Stromabwärtsseite des Gesamtwärmetauschers angeordnet ist.

25. Klimaanlage (300) nach einem der Ansprüche 16 bis 24 mit dem Gesamtwärmetauscher (344), die ferner aufweist:
einen elektrischen Vorheizer (348), der im Zuluftventilationskanal (333) zwischen dem Außenlufteinlass (323) und dem Gesamtwärmetauscher angeordnet ist.

26. Klimaanlage (300) nach einem der Ansprüche 1 bis 25, die ferner aufweist:
ein Gehäuse (301), das mindestens den ersten Hauptluftkanal (331), den zweiten Hauptluftkanal (332) und den Abluftventilationskanal (334) beherbergt;
einen ersten Ventilator (345), der konfiguriert ist, Luft in das Gehäuse zum Zuluftauslass (322) zu saugen; und
einen zweiten Ventilator (346), der konfiguriert ist, Luft in des Gehäuse zum Abluftauslass (324) zu saugen.

## Revendications

1. Climatiseur (300), comprenant :
une entrée d'air de retour (321) et une sortie d'air de refoulement (322) communiquant chacune avec un espace défini (220) ;
un premier canal d'air principal (331) prévu pour permettre un écoulement intérieur d'air de l'entrée d'air de retour à la sortie d'air de refoulement ;
un premier échangeur de chaleur (341) disposé dans le premier canal d'air principal pour entraîner un échange thermique entre le réfrigérant qui y circule et l'air qui le traverse ;
une entrée d'air extérieur (323) et une sortie d'air d'échappement (324) communiquant chacune avec l'extérieur de l'espace défini ;
un deuxième canal d'air principal (332) prévu pour permettre un écoulement intérieur d'air de l'entrée d'air extérieur à la sortie d'air d'échappement ;
un deuxième échangeur de chaleur (342) disposé dans le deuxième canal d'air principal pour entraîner un échange thermique entre le réfrigérant qui y circule et l'air qui le traverse ; et
un canal de ventilation d'échappement (334) prévu pour permettre un écoulement intérieur d'air de l'entrée d'air de retour à la sortie d'air d'échappement,
où :
le canal de ventilation d'échappement est prévu pour permettre à l'air de ventilation d'échappement (614) de traverser le deuxième échangeur de chaleur,
l'air de ventilation d'échappement étant de l'air qui a été admis par l'entrée d'air de retour et doit être refoulé par la sortie d'air d'échappement ; et où
ledit climatiseur comprend en outre
un régulateur de débit d'air (350) prévu pour réguler le flux d'au moins le premier air traversant (611), le deuxième air traversant (612) et l'air de ventilation d'échappement,
le premier air traversant étant de l'air qui a été admis par l'entrée d'air de retour et doit être refoulé par la sortie d'air de refoulement,
le deuxième air traversant étant de l'air qui a été admis par l'entrée d'air extérieur et doit être refoulé par la sortie d'air d'échappement,
**caractérisé en ce que** :
le premier ainsi que le deuxième échangeurs de chaleur sont prévus pour un écoulement intérieur de réfrigérant à dioxyde de carbone ; et
le régulateur de débit d'air est prévu pour réguler les flux du deuxième air traversant et de l'air de ventilation d'échappement, de telle manière que la température de l'air traversant le deuxième échangeur de chaleur est inférieure à la température surcritique du réfrigérant à dioxyde de carbone s'écoulant dans le deuxième échangeur de chaleur.

2. Climatiseur (300) selon la revendication 1, où
le canal de ventilation d'échappement (334) est prévu pour permettre le mélange du deuxième air traversant (612) avec l'air de ventilation d'échappement (614) avant passage du deuxième air traversant dans le deuxième échangeur de chaleur (342).

3. Climatiseur (300) selon la revendication 1 ou la revendication 2, comprenant en outre :
un canal de ventilation de refoulement (333) prévu pour permettre un écoulement intérieur d'air de l'entrée d'air extérieur (323) à la sortie d'air de refoulement (322).

4. Climatiseur (300) selon la revendication 3, où
le canal de ventilation de refoulement (333) est prévu pour permettre le mélange du premier air traversant (611) avec l'air d'admission de ventilation (613) avant passage du premier air traversant passes dans le premier échangeur de chaleur (341),
l'air d'admission de ventilation étant de l'air qui a été admis par l'entrée d'air extérieur (323) et doit être refoulé par la sortie d'air de refoulement.

5. Climatiseur (300) selon la revendication 3 ou la revendication 4, comprenant en outre
un échangeur de chaleur totale (344) formant au moins une partie du canal de ventilation de refoulement (333) et au moins une partie du canal de ventilation d'échappement (334) pour entraîner un échange thermique entre l'air d'admission de ventilation (613) et l'air de ventilation d'échappement (614).

6. Climatiseur (300) selon l'une des revendications 1 à 5, où le régulateur de débit d'air (350) comprend :
un premier registre principal (351) disposé dans le premier canal d'air principal (331) ;
un deuxième registre principal (352) disposé dans le deuxième canal d'air principal (332) ; et
un registre d'échappement (354) disposé dans le canal de ventilation d'échappement (334).

7. Climatiseur (300) selon l'une des revendications 1 à 6,
où :
le premier échangeur de chaleur (341) est disposé de telle manière qu'une direction de passage d'air du premier échangeur de chaleur est inclinée par rapport à une direction d'extension du premier canal d'air principal (331) ; et
le deuxième échangeur de chaleur (342) est disposé de telle manière qu'une direction de passage d'air du deuxième échangeur de chaleur est inclinée par rapport à une direction d'extension du deuxième canal d'air principal (332) .

8. Climatiseur (300) selon l'une des revendications 1 à 7, où le premier canal d'air principal (331) et le deuxième canal d'air principal (332) sont disposés sensiblement parallèlement et prévus pour que la direction de l'entrée d'air de retour (321) à la sortie d'air de refoulement (322) et la direction de l'entrée d'air extérieur (323) à la sortie d'air d'échappement (324) soient sensiblement opposées.

9. Climatiseur (300d) selon l'une des revendications 1 à 7, où le premier canal d'air principal (331) et le deuxième canal d'air principal (332) sont disposés sensiblement parallèlement et prévus pour que la direction de l'entrée d'air de retour (321) à la sortie d'air de refoulement (322) et la direction de l'entrée d'air extérieur (323) à la sortie d'air d'échappement (324) soient sensiblement identiques.

10. Climatiseur (300) selon l'une des revendications 3 à 7 avec le canal de ventilation de refoulement (333), où le canal de ventilation de refoulement et le canal de ventilation d'échappement (334) sont disposés sensiblement parallèlement et prévus pour que la direction de l'entrée d'air extérieur (323) à la sortie d'air de refoulement (322) et la direction de l'entrée d'air de retour (321) à la sortie d'air d'échappement (324) soient sensiblement opposées.

11. Climatiseur (300) selon l'une des revendications 3 à 7 avec le canal de ventilation de refoulement (333), où le canal de ventilation de refoulement et le canal de ventilation d'échappement (334) sont disposés sensiblement parallèlement et prévus pour que la direction de l'entrée d'air extérieur (323) à la sortie d'air de refoulement (322) et la direction de l'entrée d'air de retour (321) à la sortie d'air d'échappement (324) soient sensiblement identiques.

12. Climatiseur (300) selon l'une des revendications 1 à 11, comprenant en outre :
un mécanisme de connexion de conduites (370) prévu pour raccorder le premier échangeur de chaleur (341) et le deuxième échangeur de chaleur (342) à un compresseur de réfrigérant (411) via une conduite de réfrigérant gazeux sous haute pression (430) reliée à un côté de refoulement du compresseur de réfrigérant et une conduite de réfrigérant gazeux sous basse pression (440) reliée à un côté d'aspiration du compresseur de réfrigérant, de telle manière que le premier échangeur de chaleur, le deuxième échangeur de chaleur et le compresseur de réfrigérant forment un circuit de pompe à chaleur.

13. Climatiseur (300a) selon l'une des revendications 1 à 12, où :
le régulateur de débit d'air (350) est prévu pour commuter la traversée du deuxième échangeur de chaleur (342) par l'air de ventilation d'échappement (614).

14. Climatiseur (300a) selon la revendication 13, comprenant en outre :
un contrôleur (381) prévu pour déterminer si une condition définie est satisfaite, suivant laquelle la température de an air aspiré dans le climatiseur par l'entrée d'air extérieur (323) est supérieure ou égale à une valeur seuil définie,
où
le régulateur de débit d'air (350) est prévu pour réguler les flux du deuxième air traversant (612) et l'air de ventilation d'échappement (614) de telle manière que l'air de ventilation d'échappement traverse le deuxième échangeur de chaleur (342) si la condition définie est satisfaite, et que l'air de ventilation d'échappement est empêché de traverser le deuxième échangeur de chaleur si la condition définie n'est pas satisfaite.

15. Climatiseur (300c) selon l'une des revendications 5 à 14 avec l'échangeur de chaleur totale (344), où :
le régulateur de débit d'air (350) est prévu pour commuter la traversée du deuxième échangeur de chaleur (342) par l'air de ventilation d'échappement (614) ayant traversé l'échangeur de chaleur totale.

16. Climatiseur (300) selon l'une des revendications 1 à 15, où le deuxième échangeur de chaleur (342) comprend :
un deuxième échangeur de chaleur principal (342) prévu pour entraîner un échange thermique entre le réfrigérant qui y circule et l'air qui le traverse ; et
un deuxième échangeur de chaleur secondaire (343) disposé dans le canal de ventilation d'échappement (334) pour entraîner un échange thermique entre le réfrigérant qui y circule et l'air qui le traverse.

17. Climatiseur (300) selon la revendication 16, où
le deuxième échangeur de chaleur secondaire (343) est prévu pour que s'y écoule le réfrigérant ayant circulé par le deuxième échangeur de chaleur principal (342) quand le deuxième échangeur de chaleur (342, 323) fonctionne comme condensateur.

18. Climatiseur (300) selon la revendication 16 ou la revendication 17, où
le deuxième échangeur de chaleur secondaire (343) est prévu de manière à permettre le passage de l'air de ventilation d'échappement (614) et à empêcher le passage du deuxième air traversant (612).

19. Climatiseur (300) selon l'une des revendications 16 à 18, où
le deuxième échangeur de chaleur secondaire (343) et le deuxième échangeur de chaleur principal (342) sont disposés en série dans cet ordre dans la direction d'écoulement de l'air de ventilation d'échappement (614).

20. Climatiseur (300) selon la revendication 19 avec l'échangeur de chaleur totale (344), où
l'échangeur de chaleur totale, le deuxième échangeur de chaleur secondaire (343) et le deuxième échangeur de chaleur principal (342) sont disposés en série dans cet ordre dans la direction d'écoulement de l'air de ventilation d'échappement (614).

21. Climatiseur (300) selon l'une des revendications 16 à 18, où :
le deuxième échangeur de chaleur principal (342) est prévu de manière à permettre le passage du deuxième air traversant (612) et à empêcher le passage de l'air de ventilation d'échappement (614).

22. Climatiseur (300a) selon la revendication 21, où :
le deuxième échangeur de chaleur principal (342) et le deuxième échangeur de chaleur secondaire (343) sont en forme de plaque ; et
le canal de ventilation d'échappement (334) comporte une plaque de séparation (358) divisant un espace où de l'air est aspiré vers le deuxième échangeur de chaleur principal et le deuxième échangeur de chaleur secondaire en un espace principal où de l'air est aspiré vers le deuxième échangeur de chaleur principal et un espace secondaire où de l'air est aspiré vers le deuxième échangeur de chaleur secondaire.

23. Climatiseur (300) selon l'une des revendications 16 à 22, où
le deuxième échangeur de chaleur secondaire (343) est disposé de manière à venir en contact avec au moins une partie du deuxième air traversant (612).

24. Climatiseur (300) selon l'une des revendications 16 à 23 avec l'échangeur de chaleur totale (344),
où
le deuxième échangeur de chaleur secondaire (343) est disposé sur un côté aval de l'échangeur de chaleur totale dans la direction allant de l'entrée d'air de retour (321) à la sortie d'air d'échappement (324).

25. Climatiseur (300) selon l'une des revendications 16 à 24 avec l'échangeur de chaleur totale (344), comprenant en outre :
un pré-chauffage électrique (348) disposé dans le canal de ventilation de refoulement (333) entre l'entrée d'air extérieur (323) et l'échangeur de chaleur totale.

26. Climatiseur (300) selon l'une des revendications 1 à 25, comprenant en outre :
un boîtier (301) de logement au moins du premier canal d'air principal (331), du deuxième canal d'air principal (332) et du canal de ventilation d'échappement (334) ;
un premier ventilateur (345) prévu pour aspirer de l'air dans le boîtier vers la sortie d'air de refoulement (322) ; et
un deuxième ventilateur (346) prévu pour aspirer de l'air dans le boîtier vers la sortie d'air d'échappement (324).
